(19) Europäisches Patentamt / European Patent Office / Office européen des brevets

(11) **EP 4 502 417 A1**

(12) **EUROPEAN PATENT APPLICATION**

(43) Date of publication:
05.02.2025   Bulletin 2025/06

(21) Application number: 24190956.3

(22) Date of filing: 25.07.2024

(51) International Patent Classification (IPC):
*F16H 1/32* (2006.01)

(52) Cooperative Patent Classification (CPC):
**F16H 1/32; B25J 9/102;** F16H 57/04;
F16H 2001/323; F16H 2001/325

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   04.08.2023   CN 202310980929

(71) Applicants:
• **Guangdong Jiya Precision Machinery
Technology Co., Ltd
Foshan, Guangdong 528315 (CN)**
• **GD Midea Air-Conditioning Equipment Co., Ltd.
Foshan, Guangdong 528311 (CN)**

• **Midea Group Co., Ltd.
Foshan, Guangdong 528311 (CN)**

(72) Inventors:
• **WANG, Gang
Foshan 528311 (CN)**
• **LIN, Wenjie
Foshan 528311 (CN)**
• **MINEGISHI, Kiyoji
Foshan 528311 (CN)**
• **ISAJI, Tsuyoshi
Foshan 528311 (CN)**

(74) Representative: **RGTH
Patentanwälte PartGmbB
Neuer Wall 10
20354 Hamburg (DE)**

(54)    **INTERNAL MESHING PLANETARY GEAR DEVICE AND JOINT DEVICE FOR ROBOT**

(57)    An internal meshing planetary gear unit (1B) includes an internal gear (2), a planetary gear (3), an input side gear carrier (18), an output side gear carrier (19), a first restriction structure (91), and a second restriction structure (92). The first restriction structure (91) includes an input side cover (13) mounted in an axial direction to the input side gear carrier (18) at an opposite side to the planetary gear (3). The first restriction structure (91) restricts movement of the crankshaft (7A) toward a side of the axial direction by enabling the step portion (70) to contact the input side cover (13) directly or indirectly. The second restriction structure (92) restricts the movement of the crankshaft (7A) towards the other side of the axial direction by enabling the step portion (70) to contact the output side gear carrier (19) directly or indirectly.

FIG. 1

EP 4 502 417 A1

## Description

## TECHNICAL FIELD

The present disclosure relates to the field of internal meshing planetary gear devices and joint devices for robots, and in particular to an internal meshing planetary gear device and a joint devices for a robot.

## BACKGROUND

In the art, there is an internal meshing planetary gear device, which is separated and can eccentrically oscillate (as disclosed in the patent 1). For the internal meshing planetary gear device in the art, a plurality (such as, three) of crankshafts are arranged at a position offset from an axial center of the internal gear. Various crankshafts are synchronously driven by a crankshaft gear. Therefore, as the planetary gear (the outer gear) oscillates, an interior thereof is meshed with the inner gear.

The planetary gear comprises a first planetary gear and a second planetary gear. A pair of gear carriers are disposed on two sides of an axial direction of the first planetary gear and the second planetary gear. Each crankshaft is supported on one pair of gear carriers by a pair of conical roller bearings. When an input gear rotates, three crankshaft gears which are simultaneously meshed with the input gear rotate in a same direction and at a same speed. Since each crankshaft gear is splined to the crankshaft, the three crankshafts rotate at the same speed in the same direction when being decelerated at a ratio of the number of teeth of the input gear to the number of teeth of the crankshaft gear. As a result, three first eccentric portions in the same axial position of the three crankshafts synchronously rotate to enable the first planetary gear to oscillate. In addition, three second eccentric portions formed at the same axial position of the three crankshafts synchronously rotate to enable the second planetary gear to oscillate.

The first planetary gear and the second planetary gear are internally meshed with the internal gear. The internal gear has a gear body and an outer pin (pin member). The outer pin is rotatably mounted into the gear body to form inner teeth of the internal gear. In this case, the number of teeth (the number of pins of the outer pin) of the internal gear is slightly greater than the number of teeth of each planetary gear. Therefore, every time when each planetary gear oscillates once, the first planetary gear and the second planetary gear deviates with respect to the inner gear in a circumferential direction for an amount corresponding to a difference in the number of teeth. The self-rotation serves as each crankshaft rotating around the axial center (rotation axis) of the internal gear and is transmitted to the pair of gear carriers. Therefore, the rotation axis serves as a center around which the pair of gear carriers rotate relative to the gear body (a housing integrated therewith).

[the related art]

[patent]

Patent 1: JP publication No. 2016-75354

## SUMMARY OF THE DISCLOSURE

Technical solutions to be solved:

In the art, each crankshaft is supported to a pair of gear carriers by a pair of conical roller bearings. In this way, movement of the crankshaft in the axial direction is restricted. Therefore, the device has a complicated structure and cannot be miniaturized.

The present disclosure provides an internal meshing planetary gear device and a joint device for a robot, which has a relatively simple structure but can restrict the axial movement of the crankshaft.

Technical solutions:

The present disclosure provides an internal meshing planetary gear device comprising an internal gear, a planetary gear, at least one crankshaft, an input side gear carrier, an output side gear carrier, a first restriction structure, and a second restriction structure. The internal gear comprises an annular gear body and a plurality of outer pins. The plurality of outer pins are self-rotatably retained in a plurality of internal circumferential slots defined in an internal circumferential surface of the gear body to form inner teeth. The planetary gear comprises outer teeth that are partially meshed with the inner teeth. Each crankshaft comprises a step portion at each of at least two locations along an axial direction of an axial center of the crankshaft. The crankshaft rotates around the axial center to enable the planetary gear to oscillate. The input side gear carrier and an output side gear carrier are disposed at two sides of the axial direction of the planetary gear to rotatably support the crankshaft. By oscillating of the planetary gear, the planetary gear is enabled to rotate relative to the internal gear. The first restriction structure comprises an input side cover, wherein the input side cover is mounted to the input side gear carrier in an axial direction of the input side gear carrier and is at an opposite side of the planetary gear. The step portion contacts the input side cover directly or indirectly to restrict movement of the crankshaft towards a side of the axial direction. The second restriction structure enables the step portion to directly or indirectly contact the output side gear carrier to restrict movement of the crankshaft towards the other side of the axial direction.

The present disclosure further provides a joint device for a robot comprising the internal meshing planetary gear device as described in the above, a first member secured to the gear body, and a second member rotating relative to the first member as the planetary gear rotates relative to the internal gear.

Technical effects:

According to the present disclosure, the internal meshing planetary gear device and the joint device for the robot have a relatively simple structure but can restrict the axial movement of the crankshaft.

**BRIEF DESCRIPTION OF THE DRAWINGS**

FIG. 1 is a perspective view of an actuator of an internal meshing planetary gear device having basic structures according to an embodiment of the present disclosure.

FIG. 2 is an exploded view of the internal meshing planetary gear device shown in FIG. 1, being viewed from an input side of a rotation axis.

FIG. 3 is an exploded view of the internal meshing planetary gear device shown in FIG. 1, being viewed from an output side of the rotation axis.

FIG. 4 is a cross-sectional view of the internal meshing planetary gear device according to an embodiment of the present disclosure.

FIG. 5 is a cross-sectional view of the internal meshing planetary gear device shown in FIG. 4, taken along a line A1-A1.

FIG. 6 is a cross-sectional view of the internal meshing planetary gear device shown in FIG. 4, taken along a line B1-B1.

FIG. 7 is a cross-sectional view of the internal meshing planetary gear device according to an embodiment I of the present disclosure .

FIG. 8 is a schematic view of the internal meshing planetary gear device shown in FIG. 7, being viewed from the output side of the rotation axis.

FIG. 9 is a perspective view of a periphery of a crankshaft of the internal meshing planetary gear device according to an embodiment of the present disclosure.

FIG. 10 is an exploded view of the periphery of the crankshaft of the internal meshing planetary gear device shown in FIG. 9.

FIG. 11 is a perspective view of the crankshaft of the internal meshing planetary gear device shown in FIG. 9.

FIG. 12 is a schematic view of a major portion of the internal meshing planetary gear device and is an enlarged view of a region Z1 shown in FIG. 7.

FIG. 13 is a schematic view of the major portion of the internal meshing planetary gear device and is an enlarged view of a region Z2 shown in FIG. 7.

FIG. 14 is a schematic view of the major portion of the internal meshing planetary gear device and is an enlarged view of a region Z3 shown in FIG. 7.

FIG. 15 is a schematic view of a joint device for a robot that is arranged with the internal meshing planetary gear device according to an embodiment of the present disclosure.

FIG. 16 is a schematic view of a major portion of the internal meshing planetary gear device and is an enlarged view of a region Z1 shown in FIG. 16.

**DETAILED DESCRIPTION**

General structure:

(1) Summary

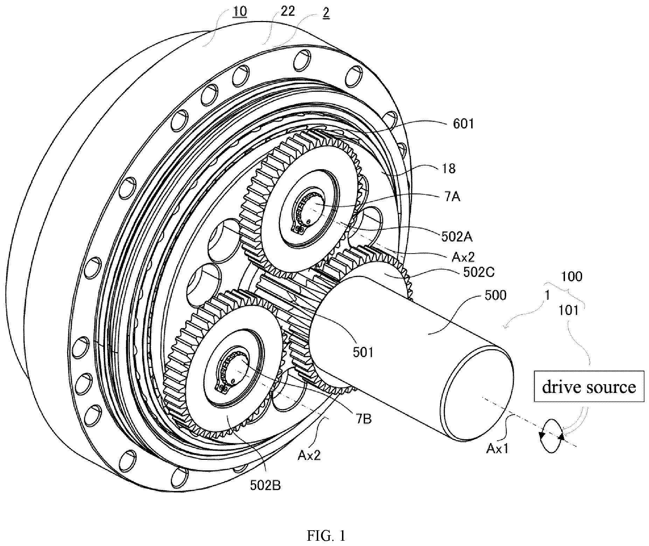

In the following, a summary of the internal meshing planetary gear device 1 of the present disclosure is described by referring to FIGS. 1 to 4. The accompanying drawings referred herein are schematic drawings, respective ratios of sizes and thicknesses of each element in the drawings do not necessarily reflect an actual size ratio. For example, shapes, sizes, and numbers of teeth of inner teeth 21 and outer teeth 31 in FIGS. 1 to 4 are shown schematically for illustrative purposes only and do not intend to limit the shapes of the structure.

The basic structure of the internal gear device 1 (hereinafter referred to as "gear device 1") is a gear device having an internal gear 2 and a planetary gear 3. In the present gear device 1, the planetary gear 3 is disposed at an inside of the annular internal gear 2. The planetary gear 3 rotates relative to the internal gear 2 by oscillating the planetary gear 3. Further, the internal meshing planetary gear device 1 is further arranged with a bearing member 6 having an outer wheel 62 and an inner wheel 61. The inner wheel 61 is disposed at an inside of the outer wheel 62 and is rotatably supported relative to the outer wheel 62. In particular, the gear device 1 of the present disclosure is splitable and can eccentrically oscillate.

The gear device 1 of the present disclosure, as shown in FIGS. 1 to 4, is arranged with a plurality (three, as shown herein) of crankshafts (eccentric shafts) 7A, 7B, and 7C, located at positions offset from an axial center (an rotation axis Ax1) of the internal gear 2. Further, the gear device 1 is arranged with an input shaft 500 and an input gear 501. The input shaft 500 is disposed at the axial center (the rotation axis Ax1) of the internal gear 2 and has the rotation axis Ax1 as a center of the input shaft 500. The input gear 501 integrally formed with the input shaft 500. The crankshaft 7A is splined with a crankshaft gear 502A, the crankshaft 7B is splined with a crankshaft gear 502B, and the crankshaft 7C is splined with a crankshaft gear 502C. The plurality of crankshaft gears 502A, 502B, 502C (three crankshaft gears herein) are meshed with the input gear 501. Therefore, for the gear device 1, when the input shaft 500 is driven, the crankshafts 7A, 7B, 7C are driven synchronously by the input gear 501 to enable the planetary gear 3 to oscillate.

The internal gear 2 has inner teeth 21 and is fixed to the outer wheel 62. In particular, in the present disclosure, the internal gear 2 has an annular gear body 22 and a plurality of outer pins 23. The plurality of outer pins 23 are rotatably retained on an inner circumference 221 of the gear body 22 to form the inner teeth 21. The planetary gear 3 has outer teeth 31 that are partially meshed with the inner teeth 21. That is, on the inside of the inner gear 2, the planetary gear 3 is tangent relative to the inner gear 2, such that a portion of the outer teeth 31 is meshed with the inner teeth 21. In this state, when the plurality of crankshafts 7A, 7B, and 7C are driven, the planetary gear 3 oscillates, and meshing positions between the inner teeth 21 and the outer teeth 31 moves in a circumferential direction of the internal gear 2. Relative rotation corresponding to a difference in the number of teeth of the planetary gear 3 and the number of teeth of internal gear 2 is generated between the two gears (the internal gear 2 and the planetary gear 3). In this case, when the internal gear 2 is fixed, the relative rotation between the two gears causes the planetary gear 3 to self-rotate (spin). As a result, the difference in the numbers of teeth of the two gears is obtained from the planetary gear 3, such that a rotational output that is decelerated at a relatively high reduction ratio is generated.

For the gear device 1 of the present disclosure, rotation equivalent to the self-rotation of the planetary gear 3 is taken as rotation of a pair of gear carriers 18 and 19 integrally formed with the inner wheel 61 of the bearing member 6 and is output. Therefore, in the gear device 1, the input shaft 500 serves as an input side, and the pair of gear carriers 18 and 19 serves as an output side, such that the gear device 1 functions as a gear device having a relatively high reduction ratio. Therefore, in the gear device 1 of the present disclosure, in order to transfer rotation, which is equivalent to the self-rotation of the planetary gear 3, to the pair of gear carriers 18 and 19, the pair of gear carriers 18 and 19 support the plurality of crankshafts 7A, 7B, 7C. The pair of gear carriers 18 and 19 are disposed on two sides of an axial direction (in a direction along the rotation axis Ax1) of the planetary gear 3 and rotatably support each of the crankshafts 7A, 7B, 7C.

In the present disclosure, the plurality of crankshafts 7A, 7B, 7C are inserted into a plurality of openings 33 defined in the planetary gear 3, respectively. In this case, as the planetary gears 3 rotates, the plurality of crankshafts 7A, 7B, 7C rotate with respect to the internal gear 2. Furthermore, each of the crankshafts 7A, 7B, 7C has a respective shaft center portion 71 and a respective eccentric portion 72 that is offset with respect to the shaft center portion 71. The pair of gear carriers 18 and 19 rotatably support the shaft center portion 71 of each of the crankshafts 7A, 7B, 7C, and the eccentric portion 72 of each of the crankshafts 7A, 7B, 7C is inserted into a respective opening 33 of the planetary gear 3. Therefore, oscillation of the planetary gear 3, i.e., rotation of the planetary gear 3, is absorbed by rotation of the eccentric portion 72 round the shaft center portion 71. In other words, the eccentric portion 72 of the shaft center portion 71 of each crankshaft 7A, 7B, and 7C rotates around the shaft center portion 71, thereby absorbing the oscillation of the planetary gear 3. Therefore, the plurality of crankshafts 7A, 7B, 7C transmits the rotation (self-rotation) of the planetary gear 3 other than the oscillation (revolution) of the planetary gear 3 to the pair of gear carriers 18 and 19.

Furthermore, as shown in FIG. 1, the gear device 1 of the present disclosure and a drive source 101 cooperatively form the actuator 100. In other words, the actuator 100 of the present disclosure has the gear device 1 and the drive source 101. The drive source 101 generates a driving force to drive the planetary gear 3 to oscillate. Specifically, the drive source 101 drives, by taking the rotation axis Ax1 as the center, the input shaft 500 to rotate to drive the planetary gear 3 to oscillate.

(2) Definition

The "annular" herein means that, when a structure is viewed from above, a space (a region) is enclosed interiorly, and a circle (a ring) is formed. The "annular" shape is not limited to a circular shape when being viewed from above, but may be oval or polygonal. Furthermore, even if a cupped shape, having a bottom, may also be annular, as long as a circumference thereof is ring-shaped.

The "revolution" herein means that an object rotates around an axis other than a central axis passing through the center (gravitational center) of the object itself. When the object revolves, a center of the object moves along an orbit having the rotation axis as a center. Therefore, for example, when the object rotates round an eccentric axis parallel to the central axis passing through the center (gravitational center) of the object itself, the object takes the eccentric axis as the rotation axis and revolves around the eccentric axis. In an example, the planetary gear 3 oscillates to rotate around the rotation axis Ax1 to revolve within the internal gear 2

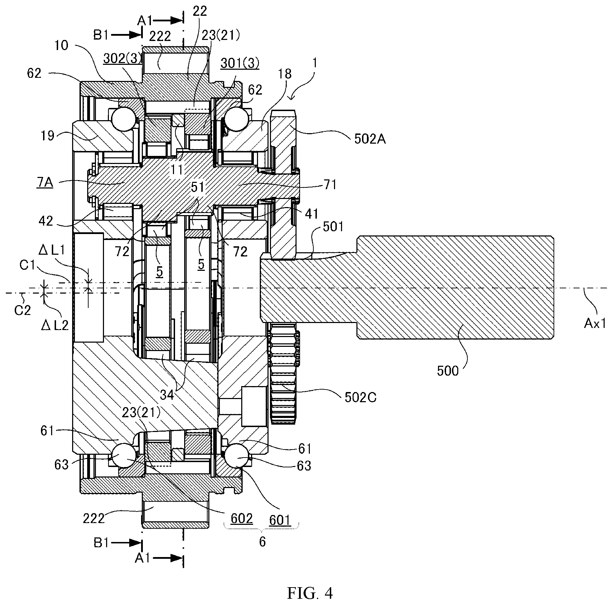

Furthermore, in the present disclosure, a side of the rotation axis Ax1 (a left side of FIG. 4) may be referred to as the "output side", and the other side of the rotation axis Ax1 (a right side of FIG. 4) may be referred to as the "input side". In the example of FIG. 4, rotation is input to the input shaft 500 from the "input side" of the rotation axis Ax1, and rotation of the pair of gear carriers 18 and 19 is output from the "output side" of the rotation axis Ax1. However, the "input side" and the "output side" are merely labels for the purpose of illustration, are not intended to define a positional relationship between the input and the output when viewing the gear device 1.

The "rotation axis" in the present disclosure refers to an imaginary axis (a straight line) that is a center of the rotation of the rotating body. That is, the rotation axis Ax1 is an imaginary axis that is not physically arranged as an entity. The input shaft 500 rotates by taking the rotation axis Ax1 as the center.

The "inner teeth" and "outer teeth" in the present disclosure are not a single "tooth", but a collection (set) of a plurality of "teeth". That is, the inner teeth 21 of the internal gear 2 comprise a collection of a plurality of teeth arranged on the inner peripheral surface 221 of the internal gear 2 (the gear body 22). Similarly, the outer teeth 31 of the planetary gear 3 comprise a collection of a plurality of teeth arranged on an outer peripheral surface of the planetary gear 3.

(3) Structure

In the following, detailed structures of the internal meshing planetary gear device 1 of the present disclosure is described by referring to FIGS. 1 to 6.

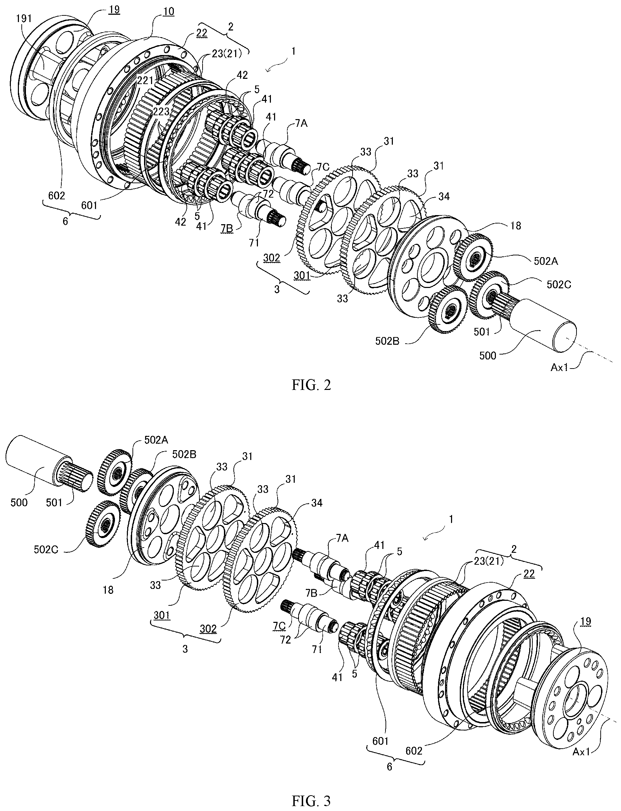

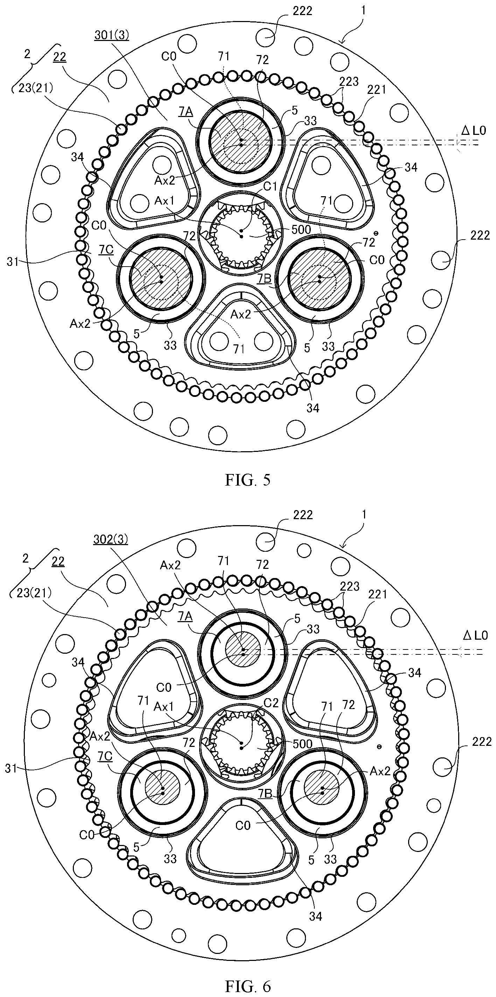

FIG. 1 is a perspective view of a generalized structure of the actuator 100 having the gear device 1. The drive source 101 is schematically shown in FIG. 1. FIG. 2 is an exploded view of the internal meshing planetary gear device shown in, being viewed from the input side of the rotation axis. FIG. 3 is an exploded view of the internal meshing planetary gear device, being viewed from the output side of the rotation axis. FIG. 4 is a cross-sectional view of the internal meshing planetary gear device 1. FIG. 5 is a cross-sectional view of the internal meshing planetary gear device shown in FIG. 4, taken along a line A1-A1. FIG. 6 is a cross-sectional view of the internal meshing planetary gear device shown in FIG. 4, taken along a line B1-B1. However, in FIGS. 5 and 6, cross-sectional views of components other than the crankshafts 7A, 7B, and 7C are shown, but shadow lines are omitted

(3.1) Overall structure

The general structure of the gear device 1, as shown in FIGS. 1 to 4, has the internal gear 2, the planetary gear 3, the bearing member 6, the plurality of crankshafts 7A, 7B, 7C, the pair of gear carriers 18 and 19, and the input shaft 500. Furthermore, in the present disclosure, the gear device 1 further has the input gear 501, the plurality of crankshaft gears 502A, 502B, 502C, a pair of roller bearings 41 and 42, an eccentric bearing 5, and a housing 10. In the present disclosure, the internal gear 2, the planetary gear 3, the plurality of crankshafts 7A, 7B, 7C, and the pair of gear carriers 18 and 19, and so on, which form the gear device 1, are made of metal, such as stainless steel, cast iron, carbon steel for mechanical structure, chromium-molybdenum steel, phosphor bronze, or aluminum bronze; or made of light metal, such as aluminum or titanium. The metal (comprising the light metal) herein comprises metal that has undergone a surface treatment, such as nitriding.

Furthermore, in the present disclosure, in an example, the gear device 1 may be configured as an internal-tangential planetary gear device having a hypocycloid tooth profile. That is, the gear device 1 of the present disclosure is arranged with the internal-tangential planetary gear 3 having a hypocycloid curved tooth profile.

Furthermore, in the present disclosure, in an example, the gear device 1 is used in a state where the gear body 22 of the internal gear 2 and the outer wheel 62 of the bearing member 6 are both fixed to a fixed member such as the housing 10. Therefore, as the internal gear 2 rotates relative to the planetary gear 3, the planetary gear 3 rotates relative to the fixed member (housing 10, or the like).

In the present disclosure, when the gear device 1 is configured for the actuator 100, a rotational force, as an input, is applied to the input shaft 500, and a rotational force, as an output, is derived from the pair of gear carriers 18 and 19 that are integrally formed with the inner wheel 61 of the bearing member 6. That is, the gear device 1 operates by taking rotation of the input shaft 500 as the input rotation and taking rotation of the pair of gear carriers 18 and 19 integrally formed with the inner wheel 61 as the output rotation. Therefore, in the gear device 1, an output rotation is obtained and is decelerated at a reduction ratio that is relatively high compared to the input rotation.

The drive source 101 is a power generation source such as a motor (electric motor). Power generated by the drive source 101 is transferred to the input shaft 500 in the gear device 1. Specifically, the drive source 101 is connected to the input shaft 500, and the power generated by the drive source 101 is transferred to the input shaft 500. In this way, the drive source 101 causes the input shaft 500 to rotate.

Further, in the gear device 1 of the present disclosure, as shown in FIG. 4, the rotation axis Ax1 of the input side and the rotation axis Ax1 of the output side are located in a same straight line. In other words, the rotation axis Ax1 at the input side is coaxial with the rotation axis Ax1 at the output side. In this case, the rotation axis Ax1 at the input side is the rotation center of the input shaft 500 to which the input rotation is provided, and the rotation axis Ax1 at the output side is the rotation center of the inner wheel 61 (and the pair of gear carriers 18 and 19) which generates the output rotation. That is, in the gear device 1, the output rotation is obtained and is decelerated at a reduction ratio that is relatively high compared to the input rotation that is coaxial with the output rotation.

The internal gear 2, as shown in FIGS. 5 and 6, is an annular structure having inner teeth 21. In the present disclosure, when the internal gear 2 is viewed from the top, at least an inner peripheral surface of the internal gear 2 is circular. On the inner circumferential surface of the circular internal gear 2, inner teeth 21 are formed along a circumferential direction of the internal gear 2. A plurality of teeth of the inner teeth 21 are in a same shape. The plurality of teeth are equally spaced apart from each other and are distributed throughout the circumferential direction on the inner circumferential surface of the internal gear 2. That is, a pitch circle of the inner teeth 21 is a perfect circle when viewed from the top. A center of the pitch circle of the internal gear 21 is located on the rotation axis Ax1. Moreover, the internal gear 2 has a certain thickness in the direction of the rotation axis Ax1. A tooth line of each inner tooth 21 is parallel to the rotation axis Ax1. A size of the inner teeth 21 in a direction of the tooth line is slightly smaller than a size of the internal gear 2 in a thickness direction.

Herein, as described in the above, the internal gear 2 has an annular (circular) gear body 22 and a plurality of outer pins 23. The plurality of outer pins 23 are retained, in a self-rotatable manner, on the inner circumferential surface 221 of the gear body 22 and form the inner teeth 21. In other words, the plurality of outer pins 23 serve as a plurality of teeth forming the inner teeth 21. Specifically, in the inner peripheral surface 221 of the gear body 22, as shown in FIG. 2, a plurality of inner peripheral slots 223 are defined throughout the inner peripheral surface 221 along the circumferential direction. The plurality of inner peripheral slots 223 are all in a same shape and are spaced apart from each other having at an equal interval. Each of the plurality of inner peripheral slots 223 is parallel to the rotation axis Ax1 and extends through the entire thickness of the gear body 22. The plurality of outer pins 23 are embedded in the plurality of inner peripheral slots 223 to be assembled to the gear body 22. The plurality of outer pins 23 are retained in the inner peripheral slots 223 respectively in a self-rotatable manner. Furthermore, the gear body 22 (together with the outer wheel 62) is secured to the housing 10. Further, a plurality of fixation holes 222 for fixing are defined in the gear body 22 (as shown in FIG. 5).

The planetary gear 3, as shown in FIGS. 5 and 6, is an annular structure having outer teeth 31. In the present disclosure, when the planetary gear 3 is viewed from the top, at least an outer peripheral surface of the planetary gear 3 is perfect circular. On the outer peripheral surface of the annular planetary gear 3, outer teeth 31 are formed along a circumferential direction of the planetary gear 3. A plurality of teeth forming the outer tooth 31 are all in a same shape. The plurality of teeth are equally spaced apart from each other and are distributed throughout the circumferential direction on the outer peripheral surface of the planetary gear 3. That is, a pitch circle of the outer teeth 31 is perfect circle when being viewed from the top. Furthermore, the planetary gear 3 has a certain thickness along the extending direction of the rotation axis Ax1. Each outer tooth 31 extends throughout the entire thickness direction of the planetary gear 3. A tooth line of each outer tooth 31 is parallel to the rotation axis Ax1. In the planetary gear 3, unlike the internal gear 2, the outer teeth 31 and a body of the planetary gear 3 are configured as a one-piece and integral metal structure.

Furthermore, the gear device 1 of the present disclosure is arranged with a plurality of planetary gears 3. Specifically, the gear device 1 is arranged with two planetary gears 3, i.e., a first planetary gear 301 and a second planetary gear 302. The two planetary gears 3 are configured to face each other in a direction parallel to the rotation axis Ax1. That is, the planetary gears 3 comprise the first planetary gear 301 and the second planetary gear 302, which are arranged in a direction (axial) direction parallel to the rotation axis Ax1. The first planetary gear 301 and the second planetary gear 302 have a same shape.

The two planetary gears 3 (the first planetary gear 301 and the second planetary gear 302) are configured to have a phase difference of 180 degrees therebetween and are disposed around the rotation axis Ax1. In the example of FIG. 4, for the first planetary gear 301 and the second planetary gear 302, a center (a center of the pitch circle of the outer teeth 31) C1 of the first planetary gear 301 located at the input side (the right side of FIG. 4) of the rotation axis Ax1 is deviated (offset) towards an upper portion of the drawing with respect to the rotation axis Ax1. On the other hand, a center C2 (the center of the pitch circle of the outer teeth 31) of the second planetary gear 302 located at the output side of the rotation axis Ax1 (the left side of FIG. 4) is deviated (offset) toward a bottom of the drawing with respect to the rotation axis Ax1. In this way, a distance ΔL1 between the rotation axis Ax1 and the center C1 is an eccentric amount that the first planetary gear 301 is eccentric with respect to the rotation axis Ax1, and a distance ΔL2 between the rotation axis Ax1 and the center C2 is an eccentric amount that the second planetary gear 302 is eccentric with respect to the rotation axis Ax1. In this way, the plurality of planetary gears 3 are distributed in a balanced manner in a circumferential direction centered on the rotation axis Ax1, and therefore, a balance of weight and a balance of load among the plurality of planetary gears 3 are obtained.

In the first planetary gear 301 and the second planetary gear 302, the center C1 and the center C2 are disposed rotationally symmetrical at 180 degrees with respect to the rotation axis Ax1. In the present disclosure, a direction of the eccentric amount ΔL1 is opposite to a direction of the eccentric amount ΔL2, when viewed from the rotation axis Ax1, but an absolute value of the eccentric amount ΔL1 is equal to an absolute value of the eccentric amount ΔL2.

In more detail, each of the crankshafts 7A, 7B, and 7C has two eccentric portions 72 relative to one shaft center portion 71. An eccentric amount ΔL0 (as shown in FIGS. 5 and 6) of a center C0 of one of the two eccentric portions 72 refers to a distance from the center of the shaft center portion 71 (an axial center Ax2) to the center C0 is equal to the respective eccentric amount ΔL1 of the first planetary gear 301; and an eccentric amount ΔL0 (as shown in FIGS. 5 and 6) of a center C0 of the other one of the two eccentric portions 72 refers to a distance from the center of the shaft center portion 71 (an axial center Ax2) to the other center C0 is equal to the respective eccentric amount ΔL2 of the second planetary gear 302. The plurality of crankshafts 7A, 7B, 7C have a same shape.

The plurality of crankshaft gears 502A, 502B, 502C, have a same shape.

Furthermore, one pair of gear carriers 18 and 19 are disposed on two sides in a direction (axial direction) parallel to the rotation axis Ax1 of the first planetary gear 301 and the second planetary gear 302. To distinguish the gear carriers 18 and 19 from each other, the gear carrier 18, which is located at the input side (right side in FIG. 4) of the rotation axis Ax1, is denoted as an input side gear carrier 18, and the gear carrier 19, which is located at the output side (left side in FIG. 4) of the rotation axis Ax1, is denoted as an output side gear carrier 19. Two ends of each of the crankshafts 7A, 7B, and 7C are held between the pair of gear carriers 18 and 19 by roller bearings 41 and 42 respectively. That is, the crankshafts 7A, 7B, and 7C are located on two sides of the direction (axial) parallel to the rotation axis Ax1 and are maintained in the input side gear carrier 18 and the output side gear carrier 19 in the self-rotation manner with respect to the planetary gears 3.

An eccentric bearing 5 is mounted at the eccentric portion 72 of each of the crankshafts 7A, 7B, and 7C. Each of the first planetary gear 301 and the second planetary gear 302 defines three openings 33 corresponding to the three crankshafts 7A, 7B, and 7C. Each of the three openings 33 receive one eccentric bearing 5 respectively. In other words, the eccentric bearings 5 are mounted in both the first planetary gear 301 and the second planetary gear 302. Each crankshaft 7A, 7B, and 7C is inserted into a respective eccentric bearing 5, such that the crankshafts 7A, 7B, and 7C are assembled with the planetary gears 3. When the eccentric bearings 5 and the crankshafts 7A, 7B, and 7C are assembled with the planetary gears 3, and when the crankshafts 7A, 7B, and 7C are rotating, the planetary gears 3 oscillate about the rotational axis Ax1.

According to the structure illustrated in the above, a rotational force is applied to the input shaft 500 to enable the input shaft 500 to rotate around the rotation axis Ax1, such that the rotational force is distributed from the input gear 501 to the plurality of crankshafts 7A, 7B, and 7C. That is, when the input gear 501 is rotating, the three crankshaft gears 502A, 502B, and 502C, which are simultaneously meshed with the input gear 501, rotate in the same direction and at the same speed. The crankshaft 7A is splined with the crankshaft gear 502A, the crankshaft 7B is splined with the crankshaft gear 502B, and the crankshaft 7C is splined with the crankshaft gear 502C. Therefore, the three crankshafts 7A, 7B and 7C rotate at the same rotation speed and in the same direction, and the rotation is decelerated in the ratio of the number of teeth of the input gear 501 to the number of teeth of the crankshaft gears 502A, 502B and 502C respectively. As a result, for the three crankshafts 7A, 7B, and 7C, the three eccentric portions 72 located on the input side of the rotation axis Ax1 rotate synchronously to drive the first planetary gear 301 to oscillate. Further, for the three crankshafts 7A, 7B, and 7C, the three eccentric portions 72 located on the output side of the rotation axis Ax1 rotate synchronously to drive the second planetary gear 302 to oscillate.

FIGS. 5 and 6 show states of the first planetary gear 301 and the second planetary gear 302 at a certain time point. FIG. 5 is a cross-sectional view of the structure shown in FIG. 4, taken along the line A1-A1, representing the first planetary gear 301. FIG. 6 is a cross-sectional view of the structure shown in FIG. 4, taken along the line B1-B1, representing the second planetary gear 302. As shown in FIGS. 5 and 6, in the first planetary gear 301 and the second planetary gear 302, the centers C1 and C2 are located rotationally symmetrical for about 180 degrees with respect to the rotation axis of rotation Ax1. In the present disclosure, the direction of the eccentric amount $\Delta L1$ is opposite to the direction of the eccentric amount $\Delta L2$ when observed from the rotation axis Ax1, but the absolute value of the eccentric amount $\Delta L1$ is equal to the absolute value of the eccentric amount $\Delta L2$ (both are equal to the eccentric amount $\Delta L0$). According to the described structure, since the shaft center portion 71 rotates around the rotation axis Ax2 (self-rotation), the first planetary gear 301 and the second planetary gear 302 rotate about the rotation axis Ax1 having a phase difference of approximately 180 degrees (eccentric rotation). Moreover, the plurality of planetary gears 3 are disposed along the circumferential direction centered on the rotation axis Ax1 and are spaced apart from each other having an equal interval. In this way, a balance of weight and a balance of load among the plurality of planetary gears 3 may be achieved.

The planetary gears 3 (the first planetary gear 301 and the second planetary gear 302) having the above configuration are disposed at the inside of the internal gear 2. In a top view, each planetary gear 3 is one turn smaller than the internal gear 2 in size. When the planetary gears 3 are assembled with the internal gear 2, the planetary gears 3 may oscillate at the inside of the internal gear 2. In this way, the outer teeth 31 are formed on the outer peripheral surface of the planetary gear 3, and the inner teeth 21 are formed on the inner peripheral surface of the internal gear 2. Therefore, when the planetary gears 3 are configured at the inside of the internal gear 2, the outer teeth 31 and the inner teeth 21 are oriented toward each other.

Further, the pitch circle of the outer teeth 31 is one turn smaller than the pitch circle of the inner teeth 21. Furthermore, when the first planetary gear 301 is tangential to the internal gear 2, the center C1 of the pitch circle of the outer teeth 31 of the first planetary gear 301 is located at a position deviated from the center (rotation axis Ax1) of the pitch circle of the inner teeth 21 by a distance $\Delta L1$. Similarly, when the second planetary gear 302 is tangential to the internal gear 2, the center C2 of the pitch circle of the outer teeth 31 of the second planetary gear 302 is located at a position deviated from the center (rotation axis Ax1) of the pitch circle of the internal tooth 21 by a distance $\Delta L2$.

Therefore, in either of the first planetary gear 301 and the second planetary gear 302, a portion of the outer teeth 31 and a portion of the inner teeth 21 are orientated toward each other and define a gap therebetween. When a difference in the number of teeth of the outer teeth 31 and the number of teeth of the inner teeth 21 is 2 or more, the inner teeth 21 in general and the outer teeth 31 in general in the circumferential direction may not be meshed with each other. However, the planetary gear 3 oscillates (revolves) around the rotation axis Ax1 at the inside of the internal gear 2, and therefore, the outer teeth 31 and the inner teeth 21 are partially meshed with each other. That is, since the planetary gears 3 (the first planetary gear 301 and the second planetary gear 302) oscillate about the rotation axis Ax1, as shown in FIGS. 5 and 6, a portion of the plurality of teeth of the outer teeth 31 are meshed with a portion of the plurality of teeth of the inner teeth 21. In this way, in the gear device 1, a portion of the outer teeth 31 are meshed with a portion of the inner teeth 21.

Here, the number of teeth of the inner teeth 21 of the internal gear 2 is N (N is a positive integer) more than the number of teeth of the outer teeth 31 of the planetary gear 3. In the present disclosure, as an example, the N may be 2, and the number of teeth (of the outer teeth 31) of the planetary gear 3 is 2 less than the number of teeth (of the inner teeth 21) of the internal gear 2. The difference in the number of teeth of the planetary gear 3 and the number of teeth of the internal gear 2 determines the reduction ratio of the output rotation with respect to the input rotation in the gear device 1.

Furthermore, in the present disclosure, as an example, a thickness of the first planetary gear 301 and the second planetary gear 302 together is less than a thickness of the gear body 22 of the internal gear 2. Further, a size of the outer teeth, which comprise both the first planetary gear 301 and the second planetary gear 302, in the tooth line direction (direction parallel to the rotation axis Ax1) is less than a size of the inner teeth 21 in the tooth line direction (direction parallel to the rotation axis Ax1). In other words, in the direction parallel to the rotation axis Ax1, the outer teeth 31 of the first planetary gear 301 and the second planetary gear 302 are received inside the tooth lines of the inner teeth 21.

Here, the first planetary gear 301 and the second planetary gear 302 are internally meshed with the internal gear 2. Therefore, whenever the first planetary gear 301 and the second planetary gear 302 oscillate once, the first planetary gear 301 and the second planetary gear 302 are phase-deviated, corresponding to the difference between the number of teeth of the inner teeth 21 and the number of teeth of the outer teeth 31, from the internal gear 2 in the circumferential direction, such that the first planetary gear 301 and the second planetary gear 302 self-rotate. The self-rotation serves as revolution that each crankshaft 7A, 7B, and 7C rotates around the axial center (rotation axis Ax1) of the internal gear 2 and is transmitted to the pair of gear carriers 18 and 19.

As a result, the pair of gear carriers 18 and 19 rotate with respect to the gear body (the housing 10 integrated therewith) around the rotation axis Ax1.

In summary, for the gear device 1 of the present disclosure, the plurality of crankshafts 7A, 7B, and 7C are configured at the position offset from the rotation axis Ax1 to enable the planetary gears 3 to oscillate, and rotation output is obtained from oscillation of the planetary gears 3. That is, in the gear device 1, when the planetary gears 3 oscillate and meshing positions between the inner teeth 21 and the outer teeth 31 move along the circumferential direction of the internal gear 2, relative rotation corresponding to the difference between the number of teeth of the planetary gear 3 and the number of teeth of the internal gear 2 is generated between the two gears (the internal gear 2 and the planetary gear 3). In this case, when the internal gear 2 is fixed, the planetary gear 3 rotates (self-rotates) as the two gears rotate relative to each other. As a result, the rotational output is obtained the planetary gear 3, and the rotational output is decelerated at a relatively high reduction ratio corresponding to the difference in the number of teeth of the two gears.

The bearing member 6 has the outer wheel 62 and the inner wheel 61. The bearing member 6 is configured to export the output from the gear device 1 where the output serves as rotation of the inner wheel 61 relative to the outer wheel 62. In addition to the outer wheel 62 and the inner wheel 61, the bearing member 6 further comprises a plurality of rotating elements 63 (as shown in FIG. 4). Each of the outer wheel 62 and the inner wheel 61 is an annular element. Each of the outer wheel 62 and the inner wheel 61 is perfect circular when being viewed from the top. The inner wheel 61 is one turn smaller than the outer wheel 62 and is configured at an inside of the outer wheel 62. In this case, since an inner diameter of the outer wheel 62 is larger than an outer diameter of the inner wheel 61, a gap is generated between an inner peripheral surface of the outer wheel 62 and an outer peripheral surface of the inner wheel 61.

The plurality of rotating elements 63 are disposed in the gap between the outer wheel 62 and the inner wheel 61. The plurality of rotating elements 63 are arranged along a circumferential direction of the outer wheel 62. The plurality of rotating elements 63 are metal elements having a same shape. The plurality of rotating elements 63 are spaced apart from each other having an equal interval distance and are distributed throughout the entire area of the circumferential direction of the outer wheel 62.

In more detail, in the gear device 1 of the present disclosure, the bearing member 6 comprises a first bearing member 601 and a second bearing member 602. Each of the first bearing member 601 and the second bearing member 602 comprises angular-contact ball bearings. Specifically, as shown in FIG. 4, when viewed from the planetary gear 3 (right side of FIG. 4), the first bearing member 601 is disposed at the input side of the rotation axis Ax1, and the second bearing member 602 is disposed at the output side of the rotation axis Ax1. For the configuration of the bearing member 6, by taking the first bearing member 601 and the second bearing member 602, a load in a radial direction, a load in a thrust direction (the direction along the rotation axis Ax1), and a bending force relative to the rotation axis Ax1 (a bending moment load) can be withstood.

In this case, the first bearing member 601 and the second bearing member 602 are disposed at two sides of a direction parallel to the rotation axis Ax1 (axial direction) relative to the planetary gear 3, and are disposed opposite to each other in the direction parallel to the rotation axis Ax1. That is, the bearing member 6 is an assembled angular-contact ball bearing that is formed by assembling a plurality of (in this case, two) angular-contact ball bearings. In an example, the first bearing member 601 and the second bearing member 602 is in a backside assembling type where each carries a load in the thrust direction (in the direction of the rotation axis Ax1) in the direction in which the respective inner wheels 61 are close to each other. Furthermore, in the gear device 1, the first bearing member 601 and the second bearing member 602 are secured to each other in a direction that the respective inner wheels 61 approach each other, such that a pre-pressure is applied to the respective inner wheels 61 properly.

Furthermore, in the gear device 1 of the present disclosure, the input side gear carrier 18 and the output side gear carrier 19 are configured at two sides of the direction parallel to the rotation axis Ax1 with respect to the planetary gear 3. The input side gear carrier 18 and the output side gear carrier 19 are assembled to each other through gear carrier holes 34 (as shown FIG. 4) of the planetary gear 3. Specifically, as shown in FIG. 4, when viewed from the planetary gear 3, the input side gear carrier 18 is disposed at the input side (right side of FIG. 4) of the rotation axis Ax1, and the output side gear carrier 19 is disposed at the output side (left side of FIG. 4) of the rotation axis Ax1. The inner wheels 61 of the bearing member 6 (the first bearing member 601 and second bearing member 602) are secured with respect to the input side gear carrier 18 and the output side gear carrier 19. In the present disclosure, as an example, the inner wheel of the first bearing member 601 is seamlessly integrated with the input side gear carrier 18. Similarly, the inner wheel of the second bearing member 602 is seamlessly integrated with the output side gear carrier 19.

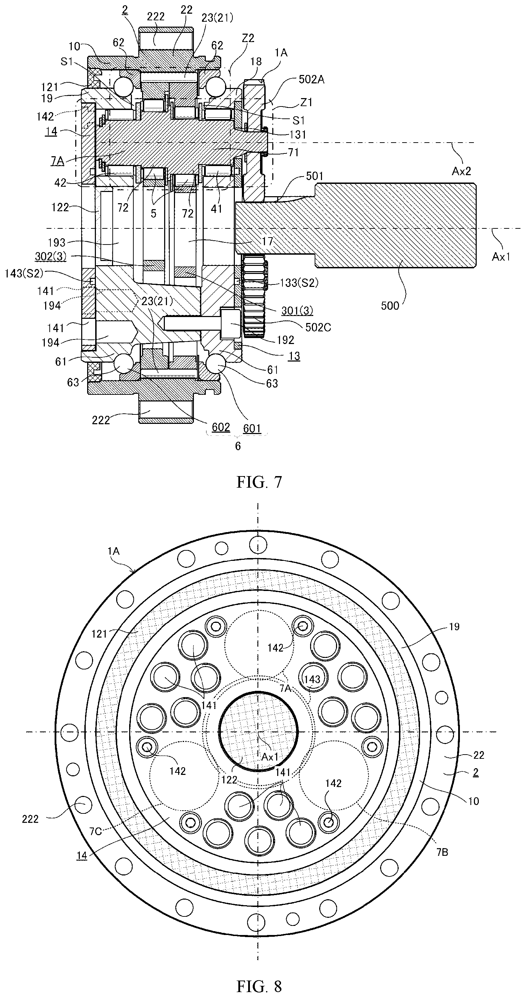

The output side gear carrier 19 has a plurality (such as 3) of gear carrier pins 191 (as shown in FIG. 2) protruding from a surface of the output side gear carrier 19 towards the input side of the rotation axis Ax1. The plurality of gear carrier pins 191 extend throuth a plurality (such as 3) of gear carrier holes 34 defined in the planetary gear 3. Front ends of the plurality of gear carrier pins 191 are secured to the input side gear carrier 18 by gear carrier bolts 192 (as shown in FIG. 7). Herein, a gap is defined between each gear carrier pin 191 and an inner peripheral surface of a respective gear carrier hole 34. The gear carrier pins 191 are movable inside the gear carrier holes 34, i.e., each gear carrier pins 191 is movable relative to a center of a respective gear carrier hole 34. In this way, when the planetary gear 3 oscillates, the gear carrier pin 191 does not contact the inner peripheral surface of the respective gear carrier hole 34.

According to the above configuration, the gear device 1 is configured to take the rotation, which is equivalent to self-rotation of the planetary gear 3, as rotation of the input side gear carrier 18 and the output side gear carrier 19 that are integrally formed with the inner wheels 61 of the bearing member 6 and to output the rotation. That is, in the present disclosure, the relative rotation between the planetary gear 3 and the internal gear 2 is output from the input side gear carrier 18 and the output side gear carrier 19. In the present disclosure, as an example, the gear device 1 is used in a state in which the outer wheel 62 (as shown in FIG. 4) of the bearing member 6 is secured to the housing 10, where the housing 10 serves as a fixation member. That is, the planetary gear 3 is connected to the input side gear carrier 18 and the output side gear carrier 19, which serve as rotating members, by the plurality of crankshafts 7A, 7B, and 7C. The gear body 22 is secured to the fixation member. Therefore, the relative rotation between the planetary gear 3 and the internal gear 2 is output from the rotating members (the input side gear carrier 18 and the output side gear carrier 19). In other words, in the present disclosure, when the planetary gear 3 is rotated relative to the gear body 22, the rotational force of the input side gear carrier 18 and the output side gear carrier 19 is exported as the output.

Further, in the present disclosure, the housing 10 is seamlessly integrally formed with the gear body 22 of the internal gear 2. That is, the gear body 22, which serves as a fixation member, is seamless arranged to the housing 10 in a direction parallel to the rotation axis Ax1.

In more detail, the housing 10 is cylindrical and serves as an outer contour of the gear device 1. In the present disclosure, a center axis of the cylindrical housing 10 coincides with the rotation axis Ax1. That is, at least an outer peripheral surface of the housing 10 is a perfect circle having the rotation axis Ax1 as the circle center when viewed from the top (viewed from a side of the axis). The housing 10 is a cylinder having two openings at tow end faces in the axial direction. In this case, the gear body 22 of the internal gear 2 is seamlessly integrally formed with the housing 10, and the housing 10 and the gear body 22 are treated as one structure. Therefore, an inner peripheral surface of the housing 10 comprises the inner peripheral surface 221 of the gear body 22. Further, the outer wheel 62 of the bearing member 6 is secured to the housing 10. That is, the outer wheel 62 of the first bearing member 601 is secured to the housing 10 by being embedded in the inner peripheral surface of the housing 10 at the input side (right side of FIG. 4) of the rotation axis Ax1, when viewed from the gear body 22. On the other hand, the outer wheel 62 of the second bearing member 602 is secured to the housing 10 by being embedded in the inner peripheral surface of the housing 10 at the output side (left side of FIG. 4) of the rotation shaft Ax 1, when viewed from the gear body 22.

Further, an end face of the input side (right side of FIG. 4) of the rotation shaft Ax1 of the housing 10 is sealed by the input side gear carrier 18, and an end face of the output side (left side of FIG. 4) of the rotation shaft Ax1 of the housing 10 is sealed by the output side gear carrier 19. In this way, as shown in FIG. 4, the planetary gears 3 (the first planetary gear 301 and the second planetary gear 302), the plurality of outer pins 23, and the eccentric bearings 5 are received in a space defined by the housing 10, the input side gear carrier 18, and the output side gear carrier 19.

Each of the plurality (3 herein) of crankshafts 7A, 7B, 7C has the respective shaft center portion 71 and two eccentric portions 72. When viewed from the top, the shaft center portion 71 is cylindrical, and at least an outer peripheral surface of the shaft center portion 71 is perfect circle. Axes Ax2 of the plurality of crankshafts 7A, 7B, 7C are distributed along the circumferential direction on an imaginary circle having the rotation axis Ax1 as the circle center and are spaced apart from each other having at an equal interval. When viewed from the top, each eccentric portion 72 is disc shaped, and at least an outer peripheral surface of the eccentric portion 72 is a perfect circle. The center axis of each eccentric portion 72 is parallel to the rotation axis Ax1, and the center C0 of each eccentric portion 72 is radially deviated from the rotation axis Ax1. The distance ΔL0 (as shown in FIGS. 5 and 6) between the axis Ax2 and the center C0 serves as the eccentric amount that the eccentric portion 72 deviates with respect to the shaft center portion 71. The eccentric portion 72 is a flange protruding from and extending throughout an outer peripheral surface of a central portion of the shaft center portion 71 in the longitudinal direction (axial direction) of the shaft center portion 71. According to the described structure, each crankshaft 7A, 7B, and 7C rotates (self-rotates) as the shaft center portion 71 rotates around the axial center Ax2, such that the eccentric portion 72 performs an eccentric motion.

In the present disclosure, the shaft center portion 71 and the two eccentric portions 72 are integrally formed by one metal member, such that each crankshaft 7A, 7B, and 7C is a seamless crankshaft. In this way, the crankshafts 7A, 7B, 7C and the eccentric bearing 5 are assembled to the planetary gears 3. Therefore, when the eccentric bearing 5 and the crankshafts 7A, 7B, 7C are assembled to the planetary gears 3, and when the crankshafts 7A, 7B, 7C rotate, the planetary gears 3 oscillate around the rotation axis Ax1.

The eccentric bearing 5 has a plurality of rotating elements 51 (as shown in FIG. 4) and is configured to absorb only the self-rotation portion of the rotation of the crankshafts 7A, 7B, 7C, and the remaining portion of the rotation of the crankshafts 7A, 7B, 7C, i.e., the oscillation (revolution) of the crankshafts 7A, 7B, and 7C, are transferred to the planetary gear 3. The plurality of rotating elements 51 are configured between outer peripheral surfaces of the eccentric portions 72 of each crankshaft 7A, 7B, and 7C and inner peripheral surface of the respective openings 33 of the planetary gear 3. That is, the eccentric portions 72 of each crankshaft 7A, 7B, and 7C serve as inner wheels of the eccentric bearing 5. The inner peripheral surfaces of the openings 33 of the planetary gear 3 serve as outer wheels of the eccentric bearing 5.

When the eccentric bearing 5 and the plurality of crankshafts 7A, 7B, and 7C are assembled to the planetary gear 3, and when the crankshafts 7A, 7B, and 7C rotate, the eccentric bearing 5 rotates around the axis Ax2 (eccentric motion). In this case, the self-rotation of the crankshafts 7A, 7B, 7C is absorbed by the eccentric bearing 5. Therefore, only the portion of the rotation of the crankshafts 7A, 7B, 7C other than the self-rotation, i.e., the oscillation of the crankshafts 7A, 7B, and 7C (the revolution), is transmitted to the planetary gear 3 through the eccentric bearing 5. Therefore, when the eccentric bearing 5 and the crankshafts 7A, 7B, and 7C are assembled to the planetary gear 3, and when the crankshafts 7A, 7B, and 7C rotate, the planetary gear 3 oscillates about the rotation axis Ax1.

In the gear device 1 of the present disclosure, a rotational force is input to the input shaft 500, and the input shaft 500 rotates around the rotation axis Ax1. In this way, the planetary gear 3 oscillates (revolves) around the rotation axis Ax1. In this case, the planetary gear 3 oscillates in a state in which the planetary gear 3 is disposed at the inside of the internal gear 2 is tangent relative to the internal gear 2, and a portion of the outer teeth 31 mesh with a portion of the inner teeth 21. Therefore, the meshing position between the inner teeth 21 and the outer teeth 31 moves along the circumferential direction of the internal gear 2. Therefore, relative rotation, which is corresponding to the difference in the number of teeth of the planetary gear 3 and the internal gear 2, is generated between the two gears (the internal gear 2 and the planetary gear 3). Furthermore, the rotation (self-rotation) of the planetary gear 3 other than the oscillation (revolution) of the planetary gear 3 is transmitted to the pair of gear carriers 18 and 19 through the plurality of crankshafts 7A, 7B, and 7C. As a result, the rotational output, which is corresponding to the difference in the number of teeth of the two gears, is obtained from the pair of gear carriers 18 and 19 and is decelerated at a relatively high reduction ratio.

Furthermore, in the gear device 1 of the present disclosure, as described above, the difference in the number of teeth of the internal gear 2 and the number of teeth of the planetary gear 3 determines the reduction ratio of the output rotation to the input rotation of the gear device 1. That is, when the number of teeth of the internal gear 2 is "V1" and the number of teeth of the planetary gear 3 is "V2", the reduction ratio R1 is expressed as the equation 1:

$$R1 = V2/(V1-V2) \text{ (Equation 1)}$$

In summary, as the difference in the number of teeth (V1-V2) between the internal gear 2 and the planetary gear 3 decreases, the reduction ratio R1 increases. In an example, the number of teeth V1 of the internal gear 2 is "72" and the number of teeth V2 of the planetary gear 3 is "70", the difference in the number of teeth (V1-V2) is "2". Therefore, according to the Equation 1, the reduction ratio R1 is "35". In this case, if viewed from the input side of the rotation axis Ax1, when each crankshaft 7A, 7B, and 7C rotates around the axis Ax2 (as shown in FIGS. 5 and 6) of each respective shaft center portion 71 by one turn (360 degrees) in a clockwise direction, the pair of gear carriers 18 and 19 rotate around the rotation axis Ax1 in a counterclockwise direction by an amount corresponding to the difference in the numbers of teeth "2". (i.e., approximately 10.3 degrees).

According to the gear device 1 of the present disclosure, such a high reduction ratio R1 can be achieved by combination of the internal gear 2 and the planetary gear 3. Further, an appropriate reduction ratio between the input gear 501 and the plurality of crankshaft gears 502A, 502B, and 502C, corresponding to the number of teeth of the input gear 501 and the number of teeth of the crankshaft gears 502A, 502B, and 502C, can also be achieved. As a result, the gear device 1 as a whole may have a high reduction ratio.

Furthermore, the gear device 1 only needs to have at least the internal gear 2, the planetary gear 3, the crankshafts 7A, 7B, and 7C, and one pair of gear carriers 18 and 19. For example, the gear device 1 may further be configured with a partition 11 as illustrated in FIG. 4. The partition 11 is configured between one pair of planetary gears 3 (between the first planetary gear 301 and the second planetary gear 302) in a direction (axial) parallel to the rotation axis Ax1.

Embodiment 1

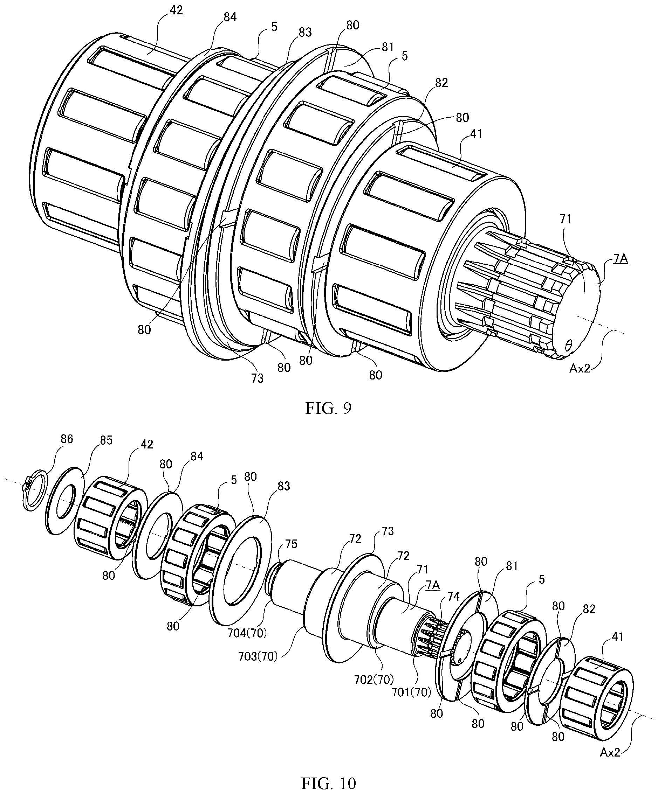

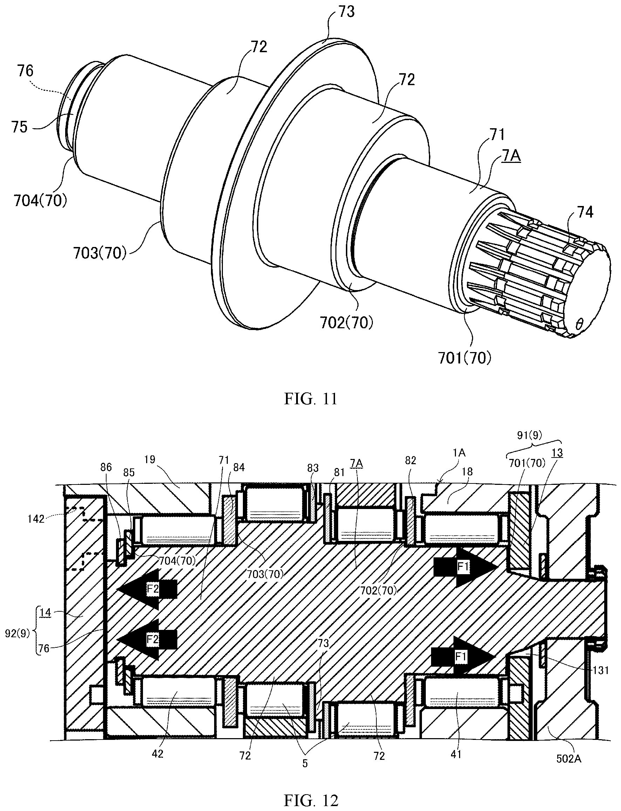

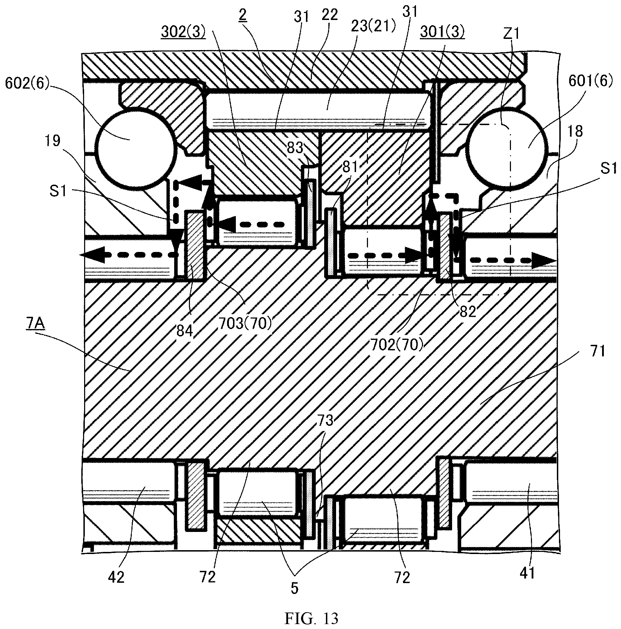

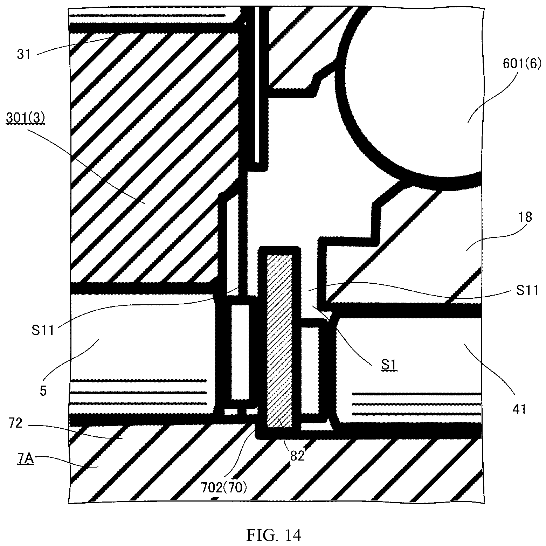

The internal meshing planetary gear device 1A (hereinafter referred to as "gear device 1A") in the present embodiment is shown in FIGS. 7 to 14, structures around the main crankshafts 7A, 7B and 7C may be different from that of the gear device 1 in the previous embodiment. In the following, same symbols are used to indicate same structures, and descriptions are omitted as appropriate. FIG. 7 is a cross-sectional view of the internal meshing planetary gear device 1A. FIG. 8 is a schematic view of the internal meshing planetary gear device 1A when viewed from the output side of the rotation axis Ax1. FIG. 9 is a perspective view of periphery structures of the crankshaft 7A. FIG. 10 is an exploded view of the periphery structures of the crankshaft 7A. FIG. 11 is a perspective view of the crankshaft 7A. FIG. 12 is an enlarged view of a region Z1 shown in FIG. 7. FIG. 13 is an enlarged view of a region Z2 shown in FIG. 7. FIG. 14 is an enlarged view of a region Z3 shown in FIG. 7.

The gear device 1A of present embodiment, as shown in FIG. 7, is further arranged with a plurality of oil seals 121, 122, and so on. The oil seal 121 seal a gap between the housing 10 and the outer peripheral surface of the output side gear carrier 19. The oil seal 122 seal a central hole 193 formed in a central portion of the output side gear carrier 19. A space confined by the plurality of oil seals 121, 122 and the like serves as a lubricant retaining space 17. The lubricant retaining space 17 comprises a space between the inner wheel 61 and the outer wheel 62 of the bearing member 6. Further, the plurality of outer pins 23, the planetary gear 3, the pair of roller bearings 41 and 42, and the eccentric bearing 5 are received in the lubricant retaining space 17.

Moreover, a lubricant is injected into the lubricant retaining space 17. The lubricant is liquid and may flow in the lubricant retaining space 17. Therefore, when the gear device 1 is in use, the lubricant enters the meshing portion between the inner teeth 21 that comprise the plurality of outer pins 23 and the outer teeth 31 of the planetary gear 3. The "liquid" herein comprises a fluid-like or gel-like substance. The "gel-like" herein refers to a state that is intermediate between a liquid phase and a solid phase, comprising a colloid state that has both the liquid phase and the solid phase. For example, the "gel-like" substance may be a gel or a sol that comprises: an emulsion in which a dispersant is in the liquid phase and a dispersion is in the liquid phase; and a suspension in which the dispersion is in the solid phase. In addition, the state in which the dispersant is in the solid phase and the dispersion is in the liquid phase is comprised in the gel. In the present disclosure, as an example, the lubricant may be a lubricant (oil) in the liquid phase.

The gear device 1A of the present embodiment is further arranged with a pair of covers 13 and 14 mounted on two sides of the pair of gear carriers 18 and 19 in the axial direction. In order to distinguish the pair of covers 13 and 14 from each other, the cover 13 is located at the input side of the rotation axis Ax1 (right side in FIG. 7) and is referred to as an input side cover 13; and the cover 14 is located at the output side of the rotation axis Ax1 (left side in FIG. 7) and is referred to as an output side cover 14. In the present embodiment, the pair of covers 13 and 14 are made of stainless steel, cast iron, carbon steel for mechanical structure, chromium-molybdenum steel, or other metals to which heat treatment is applied.

The input side cover 13 is in a disk shape having the rotation axis Ax1 as a circle center. In this case, at least an outer peripheral surface of the input side cover 13 is a perfect circle having the rotation axis Ax1 as the circle center, when viewed from the top (viewed from a side of the axial direction). An outer diameter of the input side cover 13 is one turn smaller than the outer diameter of the input side gear carrier 18. The input side cover 13 is mounted to the input side gear carrier 18 from an outside, and the outside refers to a side opposite to the planetary gear 3 when viewed from the input side gear carrier 18 (right side in FIG. 7).

The output side cover 14 is in a disk shaped having the rotation axis Ax1 as a circle center. In this case, at least an outer peripheral surface of the output side cover 14 is a perfect circle having the rotation axis Ax1 as the circle center, when viewed from the top (viewed from a side of the axial direction). An outer diameter of the output side cover 14 is one turn smaller than the outer diameter of the output side gear carrier 19. The output side cover 14 is mounted to the output side gear carrier 19 from an outside, and the outside refers to a side opposite to the planetary gear 3 when viewed from the output side gear carrier 19 (left side in FIG. 7).

In the present embodiment, the pair of covers 13 and 14 are detachably mounted to the pair of gear carriers 18 and 19, respectively. That is, the input side cover 13 is detachably mounted to the input side gear carrier 18, and the output side cover 14 is detachably mounted to the output side gear carrier 19. In an example, each of the covers 13 and 14 is mounted to the respective one of the gear carriers 18 and 19 by a plurality of fixing bolts 142 (as shown in FIG. 8). Therefore, the covers 13 and 14 are removable from the respective gear carriers 18 and 19 by releasing the plurality of fixing bolts 142.

In the present embodiment, as shown in FIG. 18, the output side cover 14 of the pair of covers 13 and 14 defines a plurality of through holes 141 corresponding to a plurality of mounting holes 194 (as shown in FIG. 7) defined in the output side gear carrier 19. That is, the output side gear carrier 19 defines the plurality of mounting holes 194 (female threads) for securing an object member. Therefore, the plurality of through holes 141 are defined at positions corresponding to the plurality of mounting holes 19 in the output side cover 14 that is to be mounted to an outside of the output side gear carrier 19. In particular, in the case that a high torque is transmitted from the output side gear carrier 19 to the object member, the number of mounting holes 194 and the number of through holes 141 may be large. Moreover, configuration and the number of mounting holes 194 and through holes 141 must be consistent with that of the object member.

On the other hand, shaft holes 131 (as shown in FIG. 7) through which the crankshafts 7A, 7B, and 7C pass are located only in the input side cover 13. That is, a plurality of shaft holes 131 are defined in the input side cover 13 in correspondence with the plurality of crankshafts 7A, 7B, and 7C. The shaft center portion 71 of each crankshaft 7A, 7B, and 7C is inserted into a respective one of the plurality of shaft holes 131. In this case, an inner diameter of each shaft hole 131 is set to be one turn larger than the outer diameter of the respective shaft center portion 71, such that the shaft center portion 71 does not contact an inner peripheral surface of the shaft hole 131.

In addition, the peripheral structure of each crankshaft 7A, 7B, and 7C will be described in further detail, and the gear device 1A of the present embodiment adopts the structure shown in FIGS. 9 to 11. Herein, the crankshaft 7A is illustrated as an example, and the crankshafts 7B and 7C are configured in the same way.

That is, the crankshaft 7A has a flange portion 73 disposed between the two eccentric portions 72 along the axis Ax2. The flange portion 73 is in a disc shape having the axis Ax2 as a circle center. At least an outer peripheral surface of the flange portion 73 is a perfect circle when viewed from the top. An outer diameter of the flange portion 73 is one turn larger than an outer diameter of the eccentric portion 72. The flange portion 73 protrudes from the outer peripheral surface of the eccentric portion 72 and extends throughout an entire circumference. In an example, the shaft center portion 71, the two eccentric portions 72, and the flange portion 73 are seamlessly integrated with each other to form a one-piece structure.

Herein, the crankshaft 7A has two eccentric portions 72 for one shaft center portion 71, and therefore, at least two step portions 70 are arranged in the axial direction. That is, the diameter of the crankshaft 7A is not uniform throughout a length of the crankshaft 7A, the diameter varies at least at a position between the shaft center portion 71 and each eccentric portion 72. Therefore, two step portions 70 are generated. In other words, an end surface of each eccentric portion 72 that faces towards an outside of the axial direction (i.e., a side opposite to the flange portion 73) is the step portion 70.

In the present embodiment, in the axial direction of the shaft center portion 71, a diameter of each of two end portions of the shaft center portion 71 of the crankshaft 7A is less than a diameter of a central portion of the shaft center portion 71. Therefore, the step portion 70 is generated at each position where the diameter of the shaft center portion 71 varies. As a result, the crankshaft 7A has step portions 70 at four positions in the axial direction. Herein, in order to distinguish the four step portions 70 from each other, starting from the input side of the rotation shaft Ax1 (right side in FIG. 7), the four step portions 70 are a first step portion 701, a second step portion 702, a third step portion 703, and a fourth step portion. That is, the first step portion 701 and the second step portion 702 are end faces toward the input side of the rotation axis Ax1, and the third step portion 703 and the fourth step portion 704 are end faces toward the output side of the rotation axis Ax1. An end portion of the shaft center portion 71 that is disposed more closed to the input side of the rotation shaft Ax1 than the first step portion 701 serves as a mounting portion 74 for mounting the crankshaft gear 502A.

The pair of roller bearings 41 and 42, the pair of eccentric bearings 5, gaskets 81 to 85, and a retaining ring 86 are assembled to the crankshaft 7A. That is, the two eccentric bearings 5 are mounted at the two eccentric portions 72 of the crankshaft 7A, respectively. The pair of roller bearings 41 and 42 are mounted in the shaft center portion 71 of the crankshaft 7A and are located at two sides of the two eccentric portions 72 in the axial direction. An end portion of the shaft center portion 71 of the crankshaft 7A that is closer to the output side (left side in FIG. 7) of the rotation axis Ax1 than the fourth step portion 704 defines a slot 75 in which the retaining ring 86 is embedded. Therefore, the retaining ring 86 is mounted at the end portion of the shaft center portion 71 and located at the output side of the rotation axis Ax1.

Herein, at the input side (right side in FIG. 7) of the rotation axis Ax1 when viewed from the flange portion 73, the gasket 81, the eccentric bearing 5, the gasket 82, and the roller bearing 41 are mounted sequentially starting from the flange portion 73. On the other hand, at the output side (left side in FIG. 7) of the rotation axis Ax1 when viewed from the flange portion 73, the gasket 83, the eccentric bearing 5, the gasket 84, the roller bearing 42, the gasket 85, and the retaining ring 86 are mounted sequentially starting from the flange portion 73. Therefore, at the input side of the rotation axis Ax1 when viewed from the flange portion 73, the gasket 81 is disposed between the flange portion 73 and the eccentric bearing 5, and the gasket 82 is disposed between the eccentric bearing 5 and the roller bearing 41. At the output side of the rotation axis Ax1 when viewed from the flange portion 73, the gasket 83 is disposed between the flange portion 73 and the eccentric bearing 5, and the gasket 84 is disposed between the eccentric bearing 5 and the roller bearing 42. Further, the roller bearing 42 contacts the retaining ring 86 via the gasket 85, such that movement towards the output side of the rotation axis Ax1 is limited.

In more detail, the eccentric portions 72 are inserted into the gaskets 81 and 83, respectively, and the shaft center portion 71 is inserted into the gaskets 82 and 84. Herein, the gasket 82 is disposed between the second step portion 702 of the crankshaft 7A and the roller bearing 41. On the other hand, the gasket 84 is disposed between the third step portion 703 of the crankshaft 7A and the roller bearing 42. Further, the gasket 85 is disposed between the fourth step portion 704 of the crankshaft 7A and the retaining ring 86. The gaskets 81 to 85, for example, may be made of metal and serve as track wheels (track disks) that may reduce friction between two members.

In addition, the gear device 1A of the present embodiment, as shown in FIG. 12, is arranged with a restriction structure 9 that restricts axial movement of each crankshaft 7A, 7B, and 7C. That is, in the gear device 1A of the present embodiment, the restriction structure 9 restricts axial movement of the crankshafts 7A, 7B, and 7C. The term "axial direction" herein means a direction along the axis Ax2 of each crankshaft 7A, 7B, and 7C, in particular, a direction parallel to the axis Ax2 of each crankshaft 7A, 7B, and 7C (thrust direction). Furthermore, restricting movement in the present disclosure refers to applying certain restrictions to movement, which comprises: prohibiting movement completely, limiting the movement within a certain range, and making the structure move difficultly. That is, in the present embodiment, the restriction structure 9 is arranged so that the movement of the crankshafts 7A, 7B, and 7C in the axial direction along the axis Ax2 of the crankshafts 7A, 7B, and 7C is restricted.

In the present embodiment, as an example, the restriction structure 9 restricts the movement of the crankshafts 7A, 7B, and 7C with respect to two sides of the axial direction (the input side of the rotation axis Ax1 and the output side of the rotation axis Ax1). That is, in the example of FIG. 8, the restriction structure restricts the movement of the crankshafts 7A, 7B, and 7C with respect to the pair of gear carriers 18 and 19 toward the right side in FIG. 8 and toward the left side in FIG. 8. As a result, in the axial direction, the crankshafts 7A, 7B, and 7C are fixedly arranged at certain positions (relative to the pair of gear carriers 18, 19).

Specifically, in the present embodiment, the restriction structure 9 comprises the pair of covers 13 and 14 mounted at two sides of the pair of gear carriers 18 and 19 in the axial direction. In summary, in the gear device 1A, the input side cover 13 and the output side cover 14 are configured to restrict the axial movement of each of the crankshafts 7A, 7B, and 7C. In particular, the gear device 1A of the present embodiment is arranged with a first restriction structure 91 that restricts the movement of the crankshafts 7A, 7B, and 7C toward one side of the axial direction (right side in FIG. 8) and a second restriction structure 92 that restricts the movement of the crankshafts 7A, 7B, and 7C toward the other side of the axial direction (left side in FIG. 8), and the first restriction structure 91 and the second restriction structure 92 serve as the restriction structure 9.

Herein, the input side cover 13 is contained in the first restriction structure 91 and withstands a force F1 applied by the crankshafts 7A, 7B, and 7C towards the respective side of the axial direction (right side in FIG. 8) to restrict the movement of the crankshafts 7A, 7B, and 7C toward the respective side of the axial direction (right side in FIG. 8). On the other hand, the output side cover 14 is contained in the second restriction structure 92 and withstands a force F2 applied by the crankshafts 7A, 7B, and 7C towards the respective side of the axial direction (left side in FIG. 8) to restrict the movement of the crankshafts 7A, 7B, and 7C toward the respective side of the axial direction (left side in FIG. 8).

In more detail, the first restriction structure 91 comprises the input side cover 13 and the first step portions 701 of the crankshafts 7A, 7B, and 7C. According to the first restriction structure 91, the first step portions 701 of the crankshafts 7A, 7B, and 7C that face toward the input side (right side in FIG. 8) of the rotation axis Ax1 contact a periphery of the shaft holes 131 in a face of the input side cover 13 facing toward the output side (left side in FIG. 8) of the rotation axis Ax1. In this way, the movement of the crankshafts 7A, 7B, and 7C toward a side of the axial direction (right side in FIG. 8) is restricted. That is, the first step portions 701 of the crankshafts 7A, 7B, and 7C contact the input side cover 13 which is mounted to the input side gear carrier 18, such that the movement of the crankshafts 7A, 7B, and 7C toward a side of the axial direction is restricted.

The second restriction structure 92 comprises the output side cover 14 and an end face 76 of the output side of the rotation axis Ax1 of each crankshaft 7A, 7B, and 7C. According to the second restriction structure 92, the end face 76 of each crankshaft 7A, 7B, and 7C facing toward the output side of the rotation axis Ax1 (left side in FIG. 8) contacts to a face of the output side cover 14 facing toward the input side of the rotation axis Ax1 (right side in FIG. 8). In this way, the movement of the crankshafts 7A, 7B, and 7C toward the other side of the axial direction (left side in FIG. 8) is restricted. That is, the end faces 76 of the crankshafts 7A, 7B, and 7C contact the output side cover 14 which is mounted to the output side gear carrier 19, such that the movement of the crankshafts 7A, 7B, and 7C toward the other side of the axial direction is restricted.

Herein, in the restriction structure 9, components of the crankshafts 7A, 7B, and 7C other than the end surfaces of the eccentric portions 72 (the second step portions 702 and the third step portions 703) contact the pair of covers 13 and 14. That is, compared to the step portions 702 and 703 that comprise the end faces of the eccentric portions 72 of the crankshafts 7A, 7B, and 7C, the restriction structure 9 is located closer to an outside in the axial direction. The restriction structure 9 restricts the axial movement of the crankshafts 7A, 7B, and 7C by contacting the end faces (the first step portions 701 or the end faces 76) facing outwardly in the axial direction. Therefore, the step portions 702 and 703 that comprise the end faces of the eccentric portions 72 do not contact the pair of covers 13 and 14, and therefore, friction is not generated, and the step portions 702, 703 may be less worn and torn.

In addition, the gear device 1A of the present embodiment has the internal gear 2, the planetary gear 3, the crankshafts 7A, 7B, and 7C, and the pair of gear carriers 18 and 19. The planetary gear 3 is rotated relative to the internal gear 2 by oscillating the planetary gear 3. The internal gear 2 has: the annular gear body 22 and the plurality of outer pins 23. The plurality of outer pins 23 are self-rotatably retained in a plurality of inner peripheral slots 223 defined in the inner peripheral surface 221 of the gear body 22 to form the inner teeth 21. The planetary gear 3 has outer teeth 31 that are partially meshed with the inner teeth 21. Each crankshaft 7A, 7B, and 7C has the step portions 70 at at least 2 locations along the axial direction of the axial center Ax2. Each crankshaft 7A, 7B, and 7C rotates around the axis Ax2 to enable the planetary gear 3 to oscillate. The pair of gear carriers 18 and 19 are disposed at two sides of the axial direction of the planetary gears 3 and rotatably support the crankshafts 7A, 7B, and 7C. As shown in FIG. 13, a lubrication path S1 is formed between the step portions 70 and the pair of gear carriers 18 and 19, and the lubricant may flow through the lubrication path S1.

That is, in the present embodiment, the lubrication path S1 is ensured to be formed between the step portions 70 and the pair of gear carriers 18 and 19. By defining the lubrication path S1, the lubricant may circulate in the gear device 1A by flowing through the lubrication path S1, such that a lubrication state of the pair of roller bearings 41 and 42 and the pair of eccentric bearings 5 is improved. In FIG. 13, flowing (circulation) of the lubricant along the lubrication pathway S1 is represented by dashed arrows.

In the present embodiment, the lubrication pathway S1 is formed in the lubricant retaining space 17 in which the lubricant is injected. By defining the lubrication path S1, lubricant shortage or depletion may not occur around the crankshafts 7A, 7B, and 7C. In this way, a certain amount of or more lubricant is always supplied. Furthermore, compared to a structure in which the lubricant is retained at a fixed location, the lubricant in the present disclosure is circulated through the lubrication path S1, and therefore, the lubricant is circulated around the crankshafts 7A, 7B, and 7C at any time, deterioration of the lubricant may be suppressed.

As a result, the lubrication state of the pair of roller bearings 41 and 42 and the pair of eccentric bearings 5 may be improved, lubrication defects may not be caused. Therefore, even when the gear device 1A is used for a long period of time, a loss due to friction may be reduced, and the service life of the gear device 1A may be increased. In summary, reliability of the gear device 1A of the present embodiment may not be reduced when used for a long period of time, and therefore, a transmission efficiency, the service life, and performance of the gear device 1A may be improved.

Herein, in the present embodiment, the lubrication path S1 comprises a radial path S11 that allows the lubricant to pass along a radial direction orthogonal to the axial direction. That is, as shown in FIG. 14 which is an enlarged view of the region Z1 of FIG. 13, the lubrication path S1 formed between the step portion 70 and the pair of gear carriers 18 and 19 comprises at least the radial path S11 that allows the lubricant to flow along the radial direction. Therefore, when the crankshafts 7A, 7B, and 7C rotate, a centrifugal force is generated to enable the lubricant to flow in the radial direction, such that the lubricant may efficiently circulate through the lubrication path S1.

Moreover, in the present embodiment, a gap is defined in the axial direction between the step portions 702 and 703 and at least one of the pair of gear carriers 18 and 19. The lubrication path S1 comprises the gap. In the present embodiment, as described above, the step portions 702, 703 comprising at least the end faces of the eccentric portions 72 do not serve as the restriction structure 9. Therefore, the gap may be defined between the step portions 702 and 703 and the pair of gear carriers 18 and 19 and serves as a part of the lubrication path S1.

In the present embodiment, as an example, the gap is defined between the step portions 702 and 703 and each of the pair of gear carriers 18 and 19, respectively, and serves as the part of the lubrication path S1.

Further, in the present embodiment, a plate-shaped component (gaskets 82 and 84) is disposed between the step portions 70 and the pair of gear carriers 18 and 19. The lubrication path S1 comprises a slot 80 (as shown in FIG. 10) which is defined in the plate-shaped component (gaskets 82 and 84) and is defined in a face opposite to the gear carriers 18 and 19. That is, as shown in FIG. 10, in the gaskets 81 to 84, the slot 80 is defined in the face facing the outside of the axial direction (gear carrier 18 and 19) and is extending in the radial direction. Herein, a plurality of groove portions 80 are defined in each of the gaskets 81 to 84. In the present embodiment, as an example, four slots 80 are defined in each of the gaskets 81 to 84. The four slots 80 are disposed equally spaced apart from each other and are distributed in a circumferential direction of each gasket 81 to 84. By defining the slots 80, the lubricant flows through the slots 80, and the slots 80 are comprised in the lubrication path S1. As a result, compared to the device without the slot 80, a cross-sectional area of the lubrication path S1 in the present embodiment may be increased, and the lubricant may circulate more easily.

Furthermore, when the plurality of crankshafts 7A, 7B, and 7C are arranged as shown in the present embodiment, a connection path S2, which connects a plurality of lubrication paths S1 formed around each of the plurality of crankshafts 7A, 7B, and 7C, may be defined. As a result, the lubricant may circulate among the plurality of crankshafts 7A, 7B, and 7C, such that the lubricant circulate throughout the entire gear device 1A, and the lubrication state may be further improved.

Specifically, as shown in FIG. 7, in each of the pair of covers 13 and 14, slots 133 and 143 are defined in faces that face inwardly in the axial direction (faces the planetary gear 3). When viewed from the top, the roller bearings 41 and 42 that support the plurality of crankshafts 7A, 7B, and 7C may extend through the slots 133 and 143, and each slot 133 and 143 is a circular slot (as shown in FIG. 8) taking the rotation axis Ax1 as the circle center. Therefore, the lubrication paths S1 comprising the plurality (herein 3) of roller bearings 41 are connected through the connection path S2 that comprises the slot 133 of the input side cover 13. Similarly, the lubrication paths S1 comprising a plurality (here 3) of roller bearings 42 are connected by the connection path S2 that comprises the slot 143 of the output side cover 14.

Furthermore, the gear device 1A of the present embodiment is arranged with an input gear 501 that rotates around the rotation axis Ax1 and the plurality of crankshaft gears 502A, 502B, and 502C. The plurality of crankshaft gears 502A, 502B, and 502C are meshed with the input gear 501 to be configured around the input gear 501. When the input gear 501 rotates, the plurality of crankshaft gears 502A, 502B, and 502C rotate synchronously. The plurality of crankshafts 7A, 7B, and 7C are arranged in one-to-one correspondence with the plurality of crankshaft gears 502A, 502B, and 502C. The plurality of crankshafts 7A, 7B, and 7C rotate together with the plurality of crankshaft gears 502A, 502B, and 502C to enable the planetary gears 3 to oscillate around the rotation axis Ax1.

In this way, in the split-type gear device 1A having the plurality of crankshafts 7A, 7B, and 7C, the axial movement of the plurality of crankshafts 7A, 7B, and 7C is restricted. Further, by circulating the lubricant around the plurality of crankshafts 7A, 7B, and 7C, the lubrication state is improved.

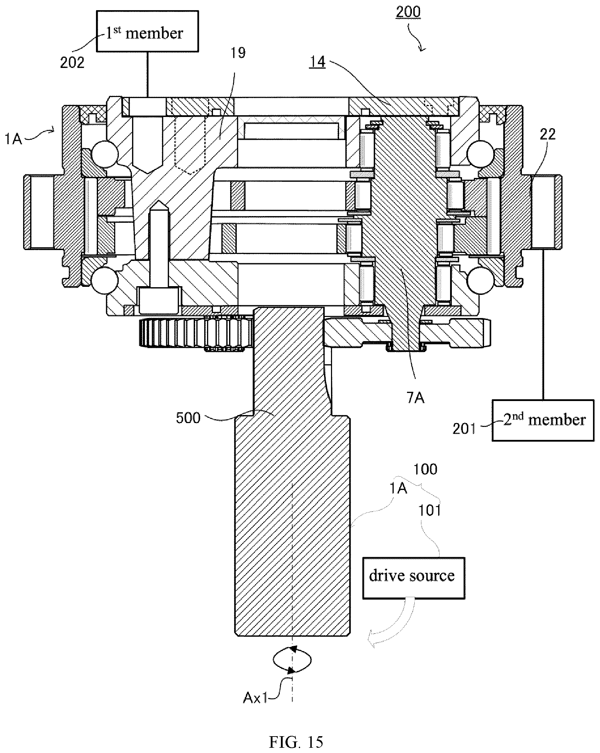

The gear device 1A of the present embodiment, as shown in FIG. 15, a first member 201, and a second member 202 cooperatively form a joint device 200 for a robot. In other words, the joint device 200 for the robot of the present embodiment has the gear device 1A, the first member 201, and the second member 202. The first member 201 is fixed to the gear body 22. As the planetary gear 3 rotates with respect to the internal gear 2, the second member 202 with respect to the first member 201. FIG. 15 shows a cross-sectional view of the joint device 200 for the robot. Further, in FIG. 15, the first member 201, the second member 202, and the drive source 101 are schematically represented.

The joint device 200 for the robot functions as the joint device by taking the first member 201 and the second member 202 rotating relative to each other around the rotation axis Ax1. Herein, the drive source 101 drives the input shaft 500 of the gear device 1A to enable the first member 201 and the second member 202 to rotate relative to each other. In this case, the rotation (input rotation) generated by the drive source 101 is decelerated at a relatively high reduction ratio in the gear device 1A, such that a relatively high torque is applied to drive the first member 201 or the second member 202. That is, the first member 201 and the second member 202 connected through the gear device 1A may perform extension/retraction motions taking the rotation axis Ax1 as a center.

The joint device 200 for the robot is used, for example, in a horizontal multi-joint robot (SCARA type robot). Further, the joint device 200 for the robot is not limited to the horizontal multi-joint robot, but may be used, for example, in an industrial robot other than horizontal multi-joint robot or robots other than industrial robots. Furthermore, the gear device 1A of the present embodiment is not limited to the joint device 200 for the robot, but may further be used, for example, as a wheel device such as an in-wheel motor, which is further used in a vehicle such as an automated guided vehicle (AGV).

Variant Embodiment

The Embodiment 1 is one of various embodiments of the present disclosure. As long as the purpose of the present disclosure is achieved, the Embodiment 1 may be changed in various ways according to the design or the like. Furthermore, the accompanying drawings referred to in the present disclosure are schematic drawings, and the respective ratios of sizes and thicknesses of constituent elements in the drawings do not necessarily reflect actual dimensional ratios. The following describes a variation of the Embodiment 1. The variation embodiment described below may be applied in appropriate combinations.

The number of crankshafts 7A, 7B, and 7C is not limited to 3, but may be 2 or 4 or more than 4. Further, if only one crankshaft is arranged, an internal meshing planetary gear device, which eccentrically oscillates and having the rotation axis Ax1 coinciding with the axis Ax2 of the crankshaft, may be obtained, and the internal meshing planetary gear device may not be in the split type. In this way, by driving the crankshaft, the planetary gears 3 oscillate, such that the pair of gear carriers 18 and 19 are enabled to rotate relative to the gear body 22, taking the rotation axis Ax1 as the rotation center.

Furthermore, in the Embodiment 1, the gear device 1A has two planetary gears 3, however, the gear device 1A may alternatively be arranged with more than 3 planetary gears 3. For example, when the gear device 1A is arranged with three planetary gears 3, the three planetary gears 3 are configured around the rotation axis Ax1 having a phase difference of 120 degrees between every two of them. Furthermore, the gear device 1A may be arranged with only one planetary gear 3. Alternatively, when the gear device 1A is arranged with three planetary gears 3, the three planetary gears 3 may be arranged around the rotation axis Ax1, and two of the three planetary gears 3 may be disposed at a same phase, the remaining one planetary gear 3 is disposed having a phase difference of 180 degrees from the two of the three planetary gears 3.

Moreover, the bearing member 6 may alternatively be a crossed bearing, or a deep slot ball bearing, or a four-point-contact ball bearing, and so on.

Furthermore, the number of teeth of the input gear 501, the number of teeth of the crankshaft gears 502A, 502B, and 502C, the number of outer pins 23 (the number of teeth of the inner teeth 21), and the number of teeth of the outer teeth 31, in the Embodiment 1 are only examples, and may be suitably changed.

Furthermore, the eccentric bearing 5 is not limited to the roller bearing but may alternatively be a deep slot ball bearing or an angular contact ball bearing, and so on.

Furthermore, materials of various elements of the gear device 1A are not limited to metal, but may alternatively be resins such as engineering plastics.

Furthermore, the gear device 1A only requires the relative rotation between the inner wheel 61 and the outer wheel 62 of the bearing member 6 to be output, but a structure that exports the rotational force of the inner wheel 61 (the input side gear carrier 18 and the output side gear carrier 19) is not limited herein. For example, the rotational force that the outer wheel 62 (housing 10) rotates relative to the inner wheel 61 may alternatively be exported.

Furthermore, in the Embodiment 1, the end faces 76 of the output side of the rotation axis Ax1 of the crankshafts 7A, 7B, and 7C are in direct contact with the output side cover 14, but it is not limited thereto. Alternatively, a plate-shaped member, such as a gasket, may be disposed between the end faces 76 and the output side cover 14. In this case, when the output side cover 14 is mounted, a thickness (and/or the number) of the plate-shaped member may be adjusted to adjust the gap between the end faces 76 and the output side cover 14, such that an axial movement amount of the crankshafts 7A, 7B, and 7C may be adjusted. Further, the plate-shaped member serves as a track wheel (track disk) that reduces the friction between the end faces 76 and the output side cover 14.

Furthermore, the lubricant is not limited to a liquid substance such as a lubricant (oil), but may alternatively be a gel substance such as grease.

(Example 1)

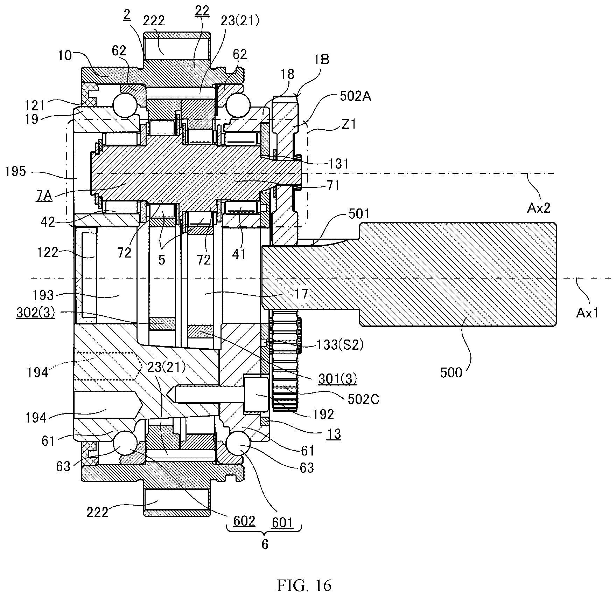

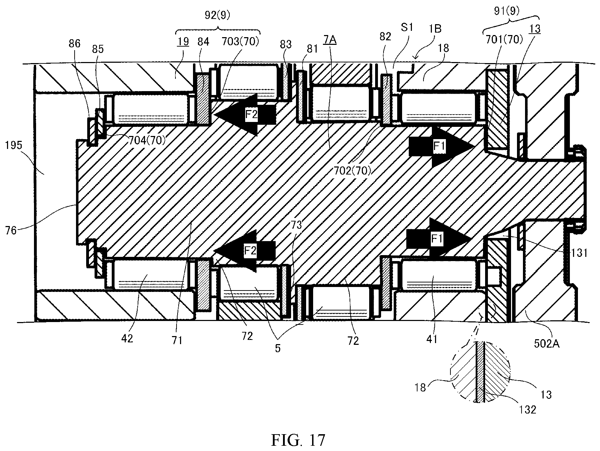

As shown in FIGS. 16 and 17, the internal meshing planetary gear device 1B (referred to as "gear device 1B") of the present embodiment differs from the gear device 1A of in the above embodiment, in the present embodiment, the output side cover 14 (as shown in FIG. 7) is omitted. In the following, structures that are the same as those in the Embodiment 1 are labeled with same reference numerals, and descriptions are omitted as appropriate. FIG. 16 is a cross-sectional view of the gear device 1B. FIG. 17 is an enlarged of the region Z1 of FIG. 16, and a partial enlargement is indicated in the suspended block.

In the gear device 1B of the present embodiment, the output side cover 14 is omitted, the output side gear carrier 19, the gasket 84, and the third step portion 703 are configured to restrict the movement of the crankshafts 7A, 7B, and 7C in the axial direction towards the other side. Furthermore, the movement of each crankshaft 7A, 7B, and 7C toward the side of the axial direction is limited by the input side cover 13 and the step portion (first step portion 701), which is same as that in the Embodiment 1.

That is, the gear device 1B comprises the internal gear 2, the planetary gear 3, the crankshafts 7A, 7B, and 7C, the input side gear carrier 18 and the output side gear carrier 19. The planetary gear 3 oscillates to rotate relative to the internal gear 2. The internal gear 2 comprises: the annular gear body 22 and the plurality of outer pins 23. The plurality of outer pins 23 are rotatably retained in the plurality of inner peripheral slots 223 defined in the inner peripheral surface 221 of the gear body 22 and form the inner teeth 21. The planetary gear 3 has the outer teeth 31 that are partially meshed with the inner teeth 21. Each crankshaft 7A, 7B, and 7C has two step portion 70s at at least two locations along the axial direction of the axial center Ax2. Each crankshaft 7A, 7B, and 7C rotates around the axial center Ax2 to enable to planetary gear 3 oscillate. The input side gear carrier 18 and the output side gear carrier 19 disposed at two sides of the axial direction of the planetary gear 3 and rotatably support the crankshafts 7A, 7B, and 7C. Herein, the gear device 1B, as shown in FIG. 17, is further arranged with the first restraining structure 91 and the second restraining structure 92. The first restraining structure 91 comprises the input side cover 13, which is mounted in the axial direction of the input side gear carrier 18 and is opposite to the planetary gear 3, and the step portion 70 (the first step portion 701) contacts directly or indirectly the input side cover 13 to restrict the movement of the crankshafts 7A, 7B, and 7C toward the side of the axial direction (the right side in FIG. 17). For the second restriction structure 92, the step portion 70 (the third step portion 703) contacts directly or indirectly the output side gear carrier 19, such that movement of the crankshafts 7A, 7B, and 7C toward the other side of the axial direction (left side in FIG. 17) is restricted.

Herein, in the present embodiment, the crankshafts 7A, 7B, and 7C have the step portions 70. The first restriction structure 91 comprises the input side cover 13. The step differential portions 70 contact directly or indirectly the input side cover 13 to restrict the movement of the crankshafts 7A, 7B, and 7C toward the side of the axial direction. Furthermore, for the second restriction structure 92, the step portion 70 contacts directly or indirectly the output side gear carrier 19 to restrict the movement of the crankshafts 7A, 7B, and 7C toward the other side of the axial direction. That is, in the gear device 1B, the output side gear holder 19, instead of the output side cover 14, is configured to restrict the axial movement (movement toward the other side of the axial direction) of the crankshafts 7A, 7B, and 7C. As a result, in the gear device 1B, the conical roller bearing or the output cover 14 mounted on the output side gear carrier 19 may be omitted, although a relatively simple structure is configured, the axial movement of the crankshafts 7A, 7B, and 7C is still limited. Therefore, according to the structure of the present embodiment, loosening and transmission loss caused by the axial movement of the crankshafts 7A, 7B, and 7C may be reduced.

Furthermore, the gear device 1B of the present embodiment has the following advantages over the gear device 1A in the Embodiment 1. In detail, depths of a plurality of mounting holes 194 defined in the output side gear carrier 19 correspond the thickness of the output side cover 14 and are large enough, such that mounting strength between the object member and the output side gear carrier 19 may be improved. Further, since the output side cover 14, which defines a plurality of through holes 141 corresponding to the plurality of mounting holes 194, is omitted, configuration and the number of through holes 141 does not need to be adjusted according to the object member. Furthermore, the fixing bolts 142 for mounting the output side cover 14 to the output side gear carrier 19 (as shown in FIG. 8) are not needed. Therefore, the mounting holes 194 may be defined without interfering with the fixing bolts 142. Specifically, in the present embodiment, the third step portion 703 that comprises the end face of the eccentric portion 72 in each of the crankshafts 7A, 7B, and 7C indirectly contacts the output side gear carrier 19 via the gasket 84. In other words, the gasket 84 is disposed between the face of the output side gear carrier 19 at the input side (right side in FIG. 17) of the rotation shaft Ax1 and the end face (third step portion 703) of the eccentric portion 72 .

FIG. 17 is an enlarged view of the region Z1 of FIG. 16. As shown in FIG. 17, the first restriction structure 91, the same as the one in the Embodiment 1, comprises the input side cover 13 and the first step portions 701 of the crankshafts 7A, 7B, and 7C. According to the first restriction structure 91, the first step portions 701 of the crankshafts 7A, 7B, and 7C toward the input side of the rotation axis Ax1 contacts a periphery of the shaft holes 131 defined in the face of the input side cover 13 facing toward the output side of the rotation axis Ax1. In this way, movement of the crankshafts 7A, 7B, and 7C toward a side of the axial direction is restricted. That is, the first step portions 701 of the crankshafts 7A, 7B, and 7C contact the input side cover 13 mounted on the input side gear carrier 18, such that movement of the crankshafts 7A, 7B, 7C toward the side of the axial direction is restricted. In other words, the input side cover 13 mounted to the input side gear carrier 18 is subjected to the force F1, which is applied by the crankshafts 7A, 7B, and 7C towards the side of the axial direction (right side in FIG. 17). In this way, the movement of the crankshafts 7A, 7B, and 7C towards the side of the axial direction is restricted.

In summary, in the first restriction structure 91, the portion of the eccentric portions 72 of the crankshafts 7A, 7B, and 7C other than the end faces (second step portions 702) of the eccentric portions 72 contact the input side cover 13. That is, the first restriction structure 91 enables the step portion (the first portion 701), which is located closer to the outside of the axial direction (right side in FIG. 17) than the end surface (second step portion 702) of the eccentric portion 72 in each crankshaft 7A, 7B, and 7C, and faces towards the outside of the axial direction, to contact the input side cover 13 directly or indirectly. In this way, the movement of the crankshafts 7A, 7B, and 7C toward the side of the axial direction is restricted. Therefore, in the second step portion 702 that comprises the end face of the eccentric portion 72, friction caused by contact with the input side cover 13 is not generated, and the step portion 702 may be less worn or torn. In the present embodiment, the first step portion 701 contacts the input side cover 13 directly, but the configuration is not limited thereto, alternatively, the first step portion 701 may contact the input side cover 13 indirectly by the gasket.

The second restriction structure 92 comprises the output side gear carrier 19, the gasket 84 and the third step portion 703. According to the second restriction structure 92, the third step portion 703 of each crankshaft 7A, 7B, and 7C toward the output side of the rotation axis Ax1 (indirectly via the gasket 84) contacts the face of the output side gear carrier 19 toward the input side of the rotation axis Ax1 (right side in FIG. 17). In this way, the movement of the crankshafts 7A, 7B, and 7C toward the other side of the axial direction (left side in FIG. 17) is restricted. That is, the output side gear carrier 19 is subjected to the force F2, which is applied from the third step portion 703 toward the other side of the axial direction (left side in FIG. 17), via the gasket 84, such that the movement of the crankshafts 7A, 7B, and 7C toward the other side of the axial direction is restricted.

That is, in the present embodiment, the second restriction structure 92 enables the step portion 70 (the third step portion 703) to indirectly contact the output side gear carrier 19 via the plate-shaped member (gasket 84). In this way, the movement of the crankshafts 7A, 7B, and 7C toward the other side of the axial direction is restricted. Therefore, the plate-shaped member (gasket 84) serves as the track wheel (track disk) that reduces the friction between the output side gear carrier 19 and the step portion 70.

Furthermore, in the present embodiment, the input side cover 13 in the first restriction structure 91 is detachably mounted to the input side gear carrier 18. That is, the input side cover 13 and the input side gear carrier 18 are two independent members. When assembling the gear device 1B, the input side cover 13 is mounted to the input side gear carrier 18. Therefore, during assembling the gear device 1B, the crankshafts 7A, 7B, and 7C are inserted from the input side gear carrier 18, and subsequently, the input side cover 13 is mounted to the input side gear carrier 18. In this way, the movement of the crankshafts 7A, 7B, 7C toward the side of the axial direction is restricted. Therefore, by adjusting a mounting position of the input side cover 13 with respect to the input side gear carrier 18, the movement amount of the crankshafts 7A, 7B, and 7C in the axial direction can be adjusted.

Herein, as shown in the block of FIG. 17, a gasket member 132 is disposed between the input side gear carrier 18 and the input side cover 13. The gasket member 132 may be, for example, a thin sheet made of metal. That is, in the axial direction, the input side cover 13 contacts the input side gear carrier 18 via the gasket member 132. In this way, when mounting the input side cover 13, a thickness (and/or the number) of the gasket member 132 may be adjusted to adjust the gap between the first step portion 701 and the input side cover 13 in the axial direction, such that the movement amount of the crankshafts 7A, 7B, and 7C in the axial direction can be adjusted.

Further, in the present embodiment, in the first restriction structure 91, the step portions 70 (first step portions 701) of the crankshafts 7A, 7B, and 7C directly or indirectly contact the input side cover 13 that is mounted to the input side gear carrier 18, such that the movement of the crankshafts 7A, 7B, and 7C toward the side of the axial direction is restricted. That is, the movement of the crankshafts 7A, 7B, and 7C in the axial direction is restricted by the input side cover 13 instead of by the input side gear carrier 18. The input side cover 13 is detachably mounted to the input side gear carrier 18, and therefore, the input side cover 13 and the input side gear carrier 18 are two independent elements. Therefore, the movement of the crankshafts 7A, 7B, and 7C toward the side of the axial direction is restricted, and furthermore, the gap, which is defined between the second step portion 702 and the input side gear carrier 18 and serves as a part of the lubrication path S1 that allows the lubricant to flow through, is also ensured.

Therefore, in the present embodiment, the same as the one in the Embodiment 1, the lubrication path S1 is defined between the step portion 70 (the second step portion 702) and the input side gear carrier 18 to allow the lubricant to flow through. In this way, the lubrication state of the pair of roller bearings 41 and the pair of eccentric bearings 5 is improved, lubrication malformation may not be caused. Therefore, even when the gear device 1B is used for a long period of time, a loss due to friction may be reduced, and the service life of the gear device 1B may be increased. In summary, reliability of the gear device 1B of the present embodiment may not be reduced even when the gear device 1B is used for a long period of time. Therefore, the transmission efficiency, the service life, and the performance of the gear device 1B may be improved. On the other hand, in the present embodiment, no gap is defined between the output side gear carrier 19, which forms the second restriction structure 92, and the third step portion 703. If a general gasket 84 is used, no lubrication path is generated between the output side gear carrier 19 and the third step portion 703. However, when the gasket 84 defining the slot 80 is configured, the lubricant may flow through the slot 80, and the lubrication path is further defined between the output side gear carrier 19 and the third step portion 703 forming the second restriction structure 92.

Furthermore, the gear device 1B of the present embodiment, same as the one in the Embodiment 1, is arranged with the input gear 501 rotating around the rotation axis Ax1 and the plurality of crankshaft gears 502A, 502B, and 502C. The plurality of crankshaft gears 502A, 502B, and 502C are meshed with the input gear 501 to be disposed around the input gear 501. When the input gear 501 rotates, the plurality of crankshaft gears 502A, 502B, and 502C rotate synchronously. The crankshafts 7A, 7B, and 7C and the plurality of crankshaft gears 502A, 502B, 502C are in one-to-one correspondence with each other. The plurality of crankshafts 7A, 7B, 7C and the plurality of crankshaft gears 502A, 502B, 502C rotate synchronously to enable the planetary gears 3 to oscillate around the rotation axis Ax1.

In this way, in the split-type gear device 1B having the plurality of crankshafts 7A, 7B, 7C, the axial movement of the plurality of crankshafts 7A, 7B, 7C is restricted. Furthermore, the lubricant circulate around the plurality of crankshafts 7A, 7B, 7C, such that the lubrication state is improved.

The structure of the Example 1 may be combined with various structures (comprising variations) illustrated in the Embodiment 1.

(Summary)

As explained above, in a first form, the internal meshing planetary gear device (1, 1A, 1B) has the internal gear (2), the planetary gear (3), the crankshaft (7A, 7B, 7C), and the input side gear carrier (18) and the output side gear carrier (19). The planetary gear (3) oscillates to enable the planetary gear (3) to rotate relative to the internal gear (2). The internal gear (2) has: the annular gear body (22) and the plurality of outer pins (23). The plurality of outer pins are rotatably retained in the plurality of inner peripheral slots (223) defined in the inner peripheral surface (221) of the gear body (22) to form the internal teeth (21). The planetary gear (3) has outer teeth (31) which are partially meshed with the inner teeth (21). The crankshaft (7A, 7B, 7C) has step portions (70) at at least two places along the axial direction of the axial center (Ax2). The crankshaft rotates around the axial center (Ax2) to enable the planetary gear (3) to oscillate. The input side gear carrier (18) and the output side gear carrier (19) are disposed at two sides of the axial direction of the planetary gear (3) to rotatably support the crankshaft (7A, 7B, 7C). The internal meshing planetary gear device (1, 1A, 1B) is further arranged with the first restriction structure (91) and the second restriction structure (92). The first restriction structure (91) comprises the input side cover (13) that is mounted in the axial direction of the input side gear carrier (18) and is disposed opposite to the planetary gear (3). The first restriction structure (91) restricts movement of the crankshaft (7A, 7B, 7C) towards a side of the axial direction by enabling the step portion (70) to contact the input side cover (13) directly or indirectly. The second restriction structure (92) restricts movement of the crankshaft (7A, 7B, 7C) towards the other side of the axial direction by enabling the step portion (70) to contact the output side gear carrier (19) directly or indirectly.

In the above form, the movement of the crankshaft (7A, 7B, 7C) toward the side of the axial direction is restricted by the step portion (70) directly or indirectly contacting the input side cover (13) mounted on the input side gear carrier (18). On the other hand, the movement of the crankshaft (7A, 7B, 7C) towards the other side of the axial direction is restricted by enabling the step portion (70) to directly or indirectly contact the output side gear carrier (19). As a result, in the internal meshing planetary gear device (1, 1A, 1B), the conical roller bearings may be omitted. Although the internal meshing planetary gear device has a relatively simple structure, the axial movement of the crankshaft (7A, 7B, 7C) is still limited. Therefore, loosening and transmission losses caused by the axial movement of the crankshaft (7A, 7B, 7C) may be reduced.

In a second form, the lubrication path (S1) is defined between the step portion (70) and the input side gear carrier (18) of the internal meshing planetary gear device (1, 1A, 1B) in the first form, and lubricant may flow along the lubrication path (S1).

According to the present form, the gap is defined between the step portion (70) and the input side gear carrier (18) in the axial direction to allow the lubricant to circulate.

In a third form of the internal mesh planetary gear device (1, 1A, 1B), the second restriction structure (92) indirectly contacts the output side gear carrier (19) via the plate-shaped member (gasket 84) to restrict the movement of the crankshaft toward the other side of the axial direction, and the input side cover (13) is detachably mounted to the input side gear carrier (18).

According to the present form, the plate-shaped member (gasket 84) serves as a track wheel (track disk) that reduces the friction between the output side gear carrier (19) and the step portion (70).

A fourth form of the internal meshing planetary gear device (1, 1A, 1B) is formed by disposing a gasket member (132) between the input side gear carrier (18) and the input side cover (13) in any one of the first form to the third form.

According to the present form, the thickness (and/or the number) of the gasket member (132) is adjusted to adjust the distance between the step portion (70) and the input side cover (13) in the axial direction, such that the movement amount of the crankshaft (7A, 7B, 7C) in the axial direction is adjusted.

A fifth form of the internal meshing planetary gear device (1, 1A, 1B) is formed by detachably mounting the input side cover (13) to the input side gear carrier (18) in any of the first form to the fourth form.

According to the present form, when assembling the internal meshing planetary gear device (1, 1A, 1B), the crankshaft (7A, 7B, 7C) is inserted from the input side gear carrier (18), and subsequently, the input side cover (13) is mounted to the input side gear carrier (18). In this way, the axial movement of the crankshaft (7A, 7B, 7C) is restricted.

In a sixth form of the internal meshing planetary gear device (1, 1A, 1B), the crankshaft (7A, 7B, 7C) has the eccentric portion (72) that is eccentric with respect to the axial center (Ax2). The first restriction structure (91) is disposed at a position that is more axially outward than the end surface (step portions 702, 703) of the eccentric portion (72) of the crankshaft (7A, 7B, 7C). The step portion (701) that faces the outside of the axial direction directly or indirectly contacts the input side cover (13) to restrict the movement of the crankshaft (7A, 7B, 7C) towards the side of the axial direction.

According to the present form, the step portion (701) of the crankshaft (7A, 7B, 7C) that is not the end surface (step portions 702, 703) of the eccentric portion (72) is configured to restrict the axial movement of the crankshaft (7A, 7B, 7C). In this way, the wear of the eccentric portion (72) is reduced.

In a seventh form of the internal meshing planetary gear device (1, 1A, 1B), the internal meshing planetary gear device further comprises: the input gear (501), which rotates around the rotation axis (Ax1); and the plurality of crankshaft gears (502A, 502B, 502C) meshed with the input gear (501) to be disposed around the input gear (501). As the input gear

(501) rotates, the plurality of crankshaft gears (502A, 502B, 502C) rotate synchronously. The crankshafts (7A, 7B, 7C) and the plurality of crankshaft gears (502A, 502B, 502C) are in one-to-one correspondence with each other. The plurality of crankshafts (7A, 7B, 7C) rotate together with the plurality of crankshaft gears (502A, 502B, 502C) to enable the planetary gear (3) to oscillate around the rotation axis (Ax1).

According to the present form, the split-type internal meshing planetary gear device (1, 1A, 1B) has a relatively simple structure and can restrict the axial movement of the crankshafts (7A, 7B, 7C).

The joint device (200) for the robot in the eighth form has: the internal meshing planetary gear device (1, 1A, 1B) of any one of the first form to seventh form; the first member (201), which is secured to the gear body (22); and the second member (202), rotating with respect to the first member (201) as the planetary gear (3) rotates with respect to the internal gear (2).

According to the present form, the internal meshing planetary gear device (1, 1A, 1B) has a relatively simple structure, and the axial movement of the crankshaft (7A, 7B, 7C) is restricted.

The structures in the second form to the seventh form are not necessary for the internal meshing planetary gear device (1, 1A, 1B), and may be omitted as appropriate.

Reference numerals:

1, 1A, 1B: Internal meshing planetary gear device
2: Internal gear
3: Planetary gear
7A, 7B, 7C: Crankshaft
13: Input side cover
18: Input side gear carrier
19: Output side gear carrier
21: Inner gear
22: Gear body
23: Outer pin
31: Outer teeth
70, 701, 702, 703, 704: Step portion
84: Gasket (plate-shaped member)
91: First restriction structure
92: Second restriction structure
132: Gasket member
200: Joint device for robot
201: First member
202: Second member
221: Inner peripheral surface (of gear body)
223: Inner peripheral slot
501: Input gear
502A, 502B, 502C: Crankshaft gear
Ax1: Rotating axis
Ax2: axial center
S1: Lubrication path

**Claims**

1. An internal meshing planetary gear device (1, 1A, 1B), comprising:

    an internal gear (2), comprising an annular gear body (22) and a plurality of outer pins (23), wherein, the plurality of outer pins (23) are self-rotatably retained in a plurality of internal circumferential slots defined in an internal circumferential surface of the gear body (22) to form inner teeth (21);
    a planetary gear (3), comprising outer teeth (31) that are partially meshed with the inner teeth (21);
    at least one crankshaft (7A, 7B, 7C), wherein each crankshaft (7A, 7B, 7C) comprises a step portion (70) at each of at least two locations along an axial direction of an axial center of the crankshaft (7A, 7B, 7C), wherein the crankshaft (7A, 7B, 7C) rotates around the axial center to enable the planetary gear (3) to oscillate; and
    an input side gear carrier (18) and an output side gear carrier (19), disposed at two sides of the axial direction of the planetary gear (3) to rotatably support the crankshaft (7A, 7B, 7C); wherein, by oscillating of the planetary gear (3), the planetary gear (3) is enabled to rotate relative to the internal gear (2);
    a first restriction structure (91), comprising an input side cover (13), wherein the input side cover is mounted to the input side gear carrier (18) in an axial direction of the input side gear carrier (18) and is at an opposite side of the planetary gear (3), wherein, the step portion (70) contacts the input side cover (13) directly or indirectly to restrict movement of the crankshaft (7A, 7B, 7C) towards a side of the axial direction; and
    a second restriction structure (92) enable the step portion (70) to directly or indirectly contact the output side gear carrier (19) to restrict movement of the crankshaft (7A, 7B, 7C) towards the other side of the axial direction.

2. The internal meshing planetary gear device according to claim 1, wherein, a lubrication path (S1) in which lubricant flows through is defined between the step portion (70) and the input side gear carrier (18).

3. The internal meshing planetary gear device according to claim 1 or 2, wherein, the second restriction structure (92) enables the step portion (70) to indirectly contact with the output side gear carrier (19) via a plate-shaped member to restrict the movement of the crankshaft (7A, 7B, 7C) toward the other side of the axial direction.

4. The internal meshing planetary gear device according to claim 1 or 2, wherein, a gasket member (132) is disposed between the input side gear carrier (18) and the input side cover (13).

5. The internal meshing planetary gear device according to claim 1 or 2, wherein, the input side cover (13) is detachably mounted to the input side gear carrier (18).

6. The internal meshing planetary gear device according to claim 1 or 2, wherein,

   the crankshaft (7A, 7B, 7C) comprises an eccentric portion (72) that is eccentric with respect to the axial center;
   the first restriction structure (91) is located further outwardly in the axial direction than an end face of the eccentric portion (72) of the crankshaft (7A, 7B, 7C), the step portion (70) that faces toward an outside of the axial direction of the crankshaft (7A, 7B, 7C) directly or indirectly contacts the input side cover (13) to restrict the movement of the crankshaft (7A, 7B, 7C) towards the side of the axial direction.

7. The internal meshing planetary gear device according to claim 1 or 2, further comprising:

   an input gear (501) rotating around a rotation axis; and
   a plurality of crankshaft gears (502A, 502B, 502C), meshed with the input gear (501) to be located around the input gear (501), wherein the plurality of crankshaft gears (502A, 502B, 502C) rotate together as the input gear (501) rotates; wherein, the number of the at least one crankshaft (7A, 7B, 7C) is more than one, the more than one crankshafts and the plurality of crankshaft gears (502A, 502B, 502C) are in one-to-one correspondence with each other; and
   the plurality of crankshafts and the plurality of crankshaft gears (502A, 502B, 502C) rotate synchronously with each other to enable the planetary gear (3) to oscillate around the rotation axis.

8. A joint device for a robot, comprising:

   an internal meshing planetary gear device according to claim 1 or claim 2;
   a first member (201), secured to a gear body (22); and
   a second member (202) rotating relative to the first member (201) as a planetary gear (3) rotates relative to an internal gear (2).

10   22   2

601

18

7A

502A

Ax2

502C

502B

7B

Ax2

500

501

100

1

101

drive source

Ax1

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 7 299384 B1 (MIDEA GROUP CO LTD; GUANGDONG JIYA PREC MACHINERY TECH CO LTD ET AL.) 27 June 2023 (2023-06-27) * the whole document * | 1-8 | INV. F16H1/32 |
| X | JP 7 299373 B1 (MIDEA GROUP CO LTD; GUANGDONG JIYA PREC MACHINERY TECH CO LTD ET AL.) 27 June 2023 (2023-06-27) | 1,8 | |
| A | * figures 1, 2, 10, 11, 13, 14, 18-21 * | 2-6 | |
| X | JP 2015 017646 A (NABTESCO CORP) 29 January 2015 (2015-01-29) | 1,7,8 | |
| A | * figures 1-6 * | 2-6 | |
| A | DE 10 2016 205975 A1 (NABTESCO CORP [JP]) 3 November 2016 (2016-11-03) * figures 1-6 * | 1-8 | |

**TECHNICAL FIELDS SEARCHED (IPC)**

F16H
B25J

The present search report has been drawn up for all claims

| Place of search | Date of completion of the search | Examiner |
|---|---|---|
| Munich | 25 November 2024 | Szodfridt, Tamas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 502 417 A1

## ANNEX TO THE EUROPEAN SEARCH REPORT
## ON EUROPEAN PATENT APPLICATION NO.

EP 24 19 0956

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2024

| Patent document cited in search report | Publication date | Patent family member(s) | | Publication date |
|---|---|---|---|---|
| JP 7299384 B1 | 27-06-2023 | JP | 7299384 B1 | 27-06-2023 |
| | | JP | 2024003284 A | 15-01-2024 |
| | | WO | 2024002388 A1 | 04-01-2024 |
| JP 7299373 B1 | 27-06-2023 | JP | 7299373 B1 | 27-06-2023 |
| | | JP | 2023157134 A | 26-10-2023 |
| | | JP | 2023157907 A | 26-10-2023 |
| JP 2015017646 A | 29-01-2015 | CN | 105378337 A | 02-03-2016 |
| | | JP | 6247035 B2 | 13-12-2017 |
| | | JP | 2015017646 A | 29-01-2015 |
| | | KR | 20160030234 A | 16-03-2016 |
| | | WO | 2015005168 A1 | 15-01-2015 |
| DE 102016205975 A1 | 03-11-2016 | CN | 106090134 A | 09-11-2016 |
| | | DE | 102016205975 A1 | 03-11-2016 |
| | | JP | 6573777 B2 | 11-09-2019 |
| | | JP | 2016205601 A | 08-12-2016 |
| | | KR | 20160128221 A | 07-11-2016 |
| | | TW | 201638497 A | 01-11-2016 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016075354 A